(19) Europäisches Patentamt
European Patent Office
Office européen des brevets

(11) **EP 3 116 269 A1**

(12) **EUROPEAN PATENT APPLICATION**
published in accordance with Art. 153(4) EPC

(43) Date of publication:
**11.01.2017 Bulletin 2017/02**

(51) Int Cl.:
**H04W 52/02** (2009.01)     **H04W 24/02** (2009.01)

(21) Application number: **14897642.6**

(22) Date of filing: **29.08.2014**

(86) International application number:
**PCT/CN2014/085589**

(87) International publication number:
**WO 2016/008200 (21.01.2016 Gazette 2016/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.07.2014 PCT/CN2014/082364**

(71) Applicant: **Huawei Technologies Co. Ltd.**
**Shenzhen, Guangdong 518129 (CN)**

(72) Inventors:
• JIN, Hui
  Shenzhen
  Guangdong 518129 (CN)
• SHEN, Li
  Shenzhen
  Guangdong 518129 (CN)
• WANG, Lei
  Shenzhen
  Guangdong 518129 (CN)
• DUAN, Xiaoyan
  Shenzhen
  Guangdong 518129 (CN)

(74) Representative: **Pfenning, Meinig & Partner mbB**
**Patent- und Rechtsanwälte**
**Theresienhöhe 11a**
**80339 München (DE)**

(54) **SIGNAL MEASUREMENT PERIOD ADJUSTMENT METHOD, WIRELESS COMMUNICATION DEVICE AND TERMINAL**

(57) Embodiments of the present invention relate to the field of communications technologies, and provide a method for adjusting a signal measurement cycle. The method includes: acquiring a data turn-off instruction used to instruct to turn off a mobile data service; and turning off a mobile data service according to the data turn-off instruction, and adjusting a signal measurement cycle of a current serving cell, where a signal measurement cycle after adjustment is N times as long as the signal measurement cycle before adjustment, N is an integer, and N ≥ 2. In the embodiments of the present invention, when a mobile data service is turned off, a quantity of times of signal measurement of the terminal within a fixed time is reduced, thereby reducing power consumption, extending a standby time of the terminal, and improving user experience.

```
┌──────────────────────────────────────────┐
│ Acquire a data turn-off instruction used  │  S101
│ to instruct to turn off a mobile data     │
│ service                                    │
└──────────────────────────────────────────┘
                    │
                    ▼
┌──────────────────────────────────────────┐
│ Turn off a mobile data service according   │  S102
│ to the data turn-off instruction, and      │
│ adjust a signal measurement cycle of a     │
│ current serving cell, where a signal       │
│ measurement cycle after adjustment is N    │
│ times as long as the signal measurement    │
│ cycle before adjustment, N is an integer,  │
│ and N ≥ 2                                   │
└──────────────────────────────────────────┘
```

FIG. 1

EP 3 116 269 A1

**Description**

TECHNICAL FIELD

The present invention relates to the field of communications technologies, and in particular, to a method for adjusting a signal measurement cycle, a wireless communications device, and a terminal.

BACKGROUND

A 2G/3G mobile communications network supports both a CS domain (Circuit Switched Domain, circuit switched domain) and a PS domain (Packet Switched Domain, packet switched domain); a WLAN (Wireless Local Area Networks, wireless local area network) and an LTE (Long Term Evolution, Long Term Evolution) network provide only a PS domain. At present, a voice service and a short message service are generally implemented in a CS domain by using a CS technology; a data service is implemented in a PS domain by using a PS technology.

Because an existing 4G (Fourth Generation, fourth generation mobile network) technology provides only a data service in a PS domain and cannot provide a voice service in a CS domain, regarding how to support voice in a 4G network, the industry separately proposes a dual standby technology and a CSFB (Circuit Switched Fallback, circuit domain fallback) technology. The dual standby technology refers to: A terminal provides two sets of radio frequency, where one set of radio frequency is a primary stack, and provides a PS service, when a 4G signal is available, the terminal works in a 4G mode, and when a 4G signal is poor, the terminal works in a 3G or 2G mode; the other set of radio frequency is specially used for a CS service in a 2G network. A core concept of the CSFB technology is: When user equipment (UE, User Equipment) does not have a voice service requirement, the UE camps on a 4G network; when the UE has a voice service requirement, the UE falls back to a 2G/3G network to perform a CS voice service, and after the CS voice service ends, the UE returns to the 4G network.

At present, when a terminal camps on a 4G network, turning off a data service is processed as follows: An AP (Application Processor, application processor) of the terminal blocks a data service request from an application, and in this case, the terminal does not send a message to a network side. When determining that the terminal sends no message within a specific period of time, the network side sends an RRC (Radio Resource Control, radio resource control) connection release instruction to the terminal, and after the terminal receives the release instruction, a modem (Modem) module of the terminal releases an RRC connection and returns to an idle (idle) state. After the terminal turns off a data service, the Modem module still works in a normal idle state mode, that is, the Modem module performs normal measurement on signal strength and/or signal quality, resulting in relatively high power consumption of the terminal.

**SUMMARY**

The present invention provides a method for adjusting a quantity of times of signal measurement, a wireless communications device, and user equipment, so as to reduce power consumption after user equipment turns off a data service.

According to a first aspect, the present invention provides an embodiment of a method for adjusting a signal measurement cycle.

In a first possible implementation manner, the method is applied to a terminal that supports at least a 4G network, and the method includes: acquiring a data turn-off instruction used to instruct to turn off a mobile data service; and turning off a mobile data service according to the data turn-off instruction, and adjusting a signal measurement cycle of a current serving cell, where a signal measurement cycle after adjustment is N times as long as the signal measurement cycle before adjustment, N is an integer, and N $\geq$ 2.

With reference to the first possible implementation manner of the first aspect, in a second possible implementation manner, after the turning off a mobile data service, the method further includes: acquiring a data turn-on instruction used to instruct to turn on the mobile data service; and turning on the mobile data service according to the data turn-on instruction, and adjusting the signal measurement cycle of the current serving cell to the signal measurement cycle before adjustment.

With reference to the first and second possible implementation manners of the first aspect, in a third possible implementation manner, the terminal is a dual card dual standby terminal, the dual card dual standby terminal includes a first smart card and a second smart card, and the acquiring a data turn-off instruction used to instruct to turn off a mobile data service includes: acquiring a data turn-off instruction used to instruct to turn on a mobile data service of the first smart card and to turn off a mobile data service of the second smart card; and the turning off a mobile data service according to the data turn-off instruction, and adjusting a signal measurement cycle of a current serving cell includes: turning on a mobile data service of the first smart card and turning off a mobile data service of the second smart card according to the data turn-off instruction, and adjusting a signal measurement cycle of a current serving cell corresponding to the second smart card.

With reference to any one of the first to third possible implementation manners of the first aspect, in a fourth possible implementation manner, the signal measurement cycle of the current serving cell is a discontinuous reception DRX cycle.

According to a second aspect, the present invention provides an embodiment of a method for adjusting a signal measurement threshold.

In a first possible implementation manner, the method is applied to a terminal that supports at least a 4G network, and the method includes: acquiring a data turn-off instruction used to instruct to turn off a mobile data service; and turning off a mobile data service according to the data turn-off instruction, and adjusting a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment.

With reference to the first possible implementation manner of the second aspect, in a second possible implementation manner, the terminal is a dual card dual standby terminal, a first smart card and a second smart card are connected to the dual card dual standby terminal, and the acquiring a data turn-off instruction used to instruct to turn off a mobile data service includes: acquiring a data turn-off instruction used to instruct to turn on a mobile data service of the first smart card and to turn off a mobile data service of the second smart card; and the turning off a mobile data service according to the data turn-off instruction, and adjusting a signal measurement threshold value of a current serving cell includes: turning on a mobile data service of the first smart card and turning off a mobile data service of the second smart card according to the data turn-off instruction, and adjusting a signal measurement threshold value of a current serving cell corresponding to the second smart card.

With reference to the first or second possible implementation manner of the second aspect, in a third possible implementation manner, the signal measurement threshold value of the neighboring cell of the current serving cell after adjustment is less than the signal measurement threshold value of the neighboring cell of the current serving cell before adjustment by 2 decibels dB or 3 dB.

With reference to any one of the first to third possible implementation manners of the second aspect, in a fourth possible implementation manner, after the turning off a mobile data service, the method further includes: acquiring a data turn-on instruction used to instruct to turn on the mobile data service; and turning on the mobile data service according to the data turn-on instruction, and adjusting the signal measurement threshold value of the neighboring cell of the current serving cell to the signal measurement threshold value of the neighboring cell of the current serving cell before adjustment.

According to a third aspect, the present invention provides an embodiment of a method for adjusting a signal measurement threshold.

In a first possible implementation manner, the method is applied to a terminal that supports at least a 4G network, and the method includes: acquiring a data turn-off instruction used to instruct to turn off a mobile data service; and turning off a mobile data service according to the data turn-off instruction, and adjusting a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment.

With reference to the first possible implementation manner of the third aspect, in a second possible implementation manner, the terminal is a dual card dual standby terminal, a first smart card and a second smart card are connected to the dual card dual standby terminal, and the acquiring a data turn-off instruction used to instruct to turn off a mobile data service includes: acquiring a data turn-off instruction used to instruct to turn on a mobile data service of the first smart card and to turn off a mobile data service of the second smart card; and the turning off a mobile data service according to the data turn-off instruction, and adjusting a signal measurement parameter of a neighboring cell of a current serving cell includes: turning on a mobile data service of the first smart card and turning off a mobile data service of the second smart card according to the data turn-off instruction, and adjusting a signal measurement parameter of a neighboring cell of a current serving cell corresponding to the second smart card.

With reference to the first or second possible implementation manner of the third aspect, in a third possible implementation manner, the signal measurement parameter includes a selection receive level Srxlev value, and the adjusting a signal measurement parameter of a neighboring cell of a current serving cell includes: acquiring a power value of a reference signal of the current serving cell, a minimum signal power value required by the current serving cell, and a power offset value required by the current serving cell; acquiring an Srxlev value of the current serving cell according to the power value of the reference signal of the current serving cell, the minimum signal power value required by the current serving cell, and the power offset value required by the current serving cell; and adjusting the Srxlev value, where an Srxlev value after adjustment is greater than the Srxlev value before adjustment;

or

acquiring a power value of a reference signal of the current serving cell, a minimum signal power value required by the current serving cell, and a power offset value required by the current serving cell; and adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

With reference to the first or second possible implementation manner of the third aspect, in a fourth possible implementation manner, the signal measurement parameter includes a selection receive level Srxlev value and a selection quality Squal value, and the adjusting a signal measurement parameter of a neighboring cell of a current serving cell includes:

acquiring a power value of a reference signal of the current serving cell, a minimum signal power value required by the current serving cell, and a power offset value required by the current serving cell; acquiring an Srxlev value according to the power value of the reference signal of the current serving cell, the minimum signal power value required by the current serving cell, and the power offset value required by the current serving cell; acquiring a quality value of the reference signal of the current serving cell, a minimum signal quality value required by the current serving cell, and a quality offset value required by the current serving cell; acquiring a Squal value of the current serving cell according to the quality value of the reference signal of the current serving cell, the minimum signal quality value required by the current serving cell, and the quality offset value required by the current serving cell; and adjusting the Srxlev value and the Squal value, where an Srxlev value after adjustment is greater than the Srxlev value before adjustment, and a Squal value after adjustment is greater than the Squal value before adjustment; or

acquiring a power value of a reference signal of the current serving cell, a minimum signal power value required by the current serving cell, and a power offset value required by the current serving cell; acquiring a quality value of the reference signal of the current serving cell, a minimum signal quality value required by the current serving cell, and a quality offset value required by the current serving cell; adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

With reference to any one of the first to fourth possible implementation manners of the third aspect, in a fifth possible implementation manner, after the turning off a mobile data service, the method further includes: acquiring a data turn-on instruction used to instruct to turn on the mobile data service; and turning on the mobile data service according to the data turn-on instruction, and adjusting the value of the signal measurement parameter of the neighboring cell of the current serving cell to the value of the signal measurement parameter of the neighboring cell of the current serving cell before adjustment.

According to a fourth aspect, the present invention provides an embodiment of a signal measurement method.

In a first possible implementation manner, the method is applied to a terminal that supports at least a 4G network, and the method includes: acquiring a data turn-off instruction used to instruct to turn off a mobile data service; turning off a mobile data service according to the data turn-off instruction; acquiring location information of the terminal by using a sensor; and stopping signal measurement when it is determined according to the location information that a location of the terminal does not change.

With reference to the first possible implementation manner of the fourth aspect, in a second possible implementation manner, after the stopping signal measurement when it is determined according to the location information that a location of the terminal does not change, the method further includes: acquiring the location information of the terminal by using the sensor; and when it is determined according to the location information that the location of the terminal keeps changing within a preset time, starting signal measurement.

According to a fifth aspect, the present invention provides an embodiment of a network handover method.

In a first possible implementation manner, the method is applied to a terminal that supports at least a 4G network, and the method includes: acquiring a data turn-off instruction used to instruct to turn off a mobile data service; and turning off a mobile data service according to the data turn-off instruction, reselecting a 3G or 2G network cell, and camping on the reselected network cell.

With reference to the first possible implementation manner of the fifth aspect, in a second possible implementation manner, the network handover method is applied to a circuit domain fallback CSFB terminal that supports at least 4G; or the network handover method is applied to a dual card dual standby terminal that supports at least 4G.

With reference to the first or second possible implementation manner of the fifth aspect, in a third possible implementation manner, the terminal includes a first smart card and a second smart card, and the acquiring a data turn-off instruction used to instruct to turn off a mobile data service includes: acquiring a data turn-off instruction used to instruct to turn on a mobile data service of the first smart card and to turn off a mobile data service of the second smart card; and the turning off a mobile data service according to the data turn-off instruction, and reselecting a 3G or 2G network cell includes: turning on a mobile data service of the first smart card and turning off a mobile data service of the second smart card according to the data turn-off instruction, and reselecting the 3G or 2G network cell for the second smart card.

With reference to the third possible implementation manner of the fifth aspect, in a fourth possible implementation manner, the turning on a mobile data service of the first smart card includes: sending a first attach request to a mobile network in which the first smart card is located; the turning off a mobile data service of the second smart card includes: sending a detach request to a 4G mobile network in which the second smart card is located; and the reselecting the 3G or 2G network cell for the second smart card includes: sending a second attach request to the 3G or 2G network reselected for the second smart card.

With reference to the third or fourth possible implementation manner of the fifth aspect, in a fifth possible implementation manner, the method further includes: presenting, by the terminal, user prompt information, where the user prompt information is used to inform a user that the second smart card turns off a mobile data service and the first smart card turns on a mobile data service.

With reference to any one of the first to fourth possible implementation manners of the fifth aspect, in a sixth possible implementation manner, after the turning off a data service, the turning off a mobile data service according to the data turn-off instruction, reselecting a 3G or 2G network cell, and camping on the reselected network cell includes: turning off a mobile data service according to the data turn-off instruction, and presenting user prompt information, where the user prompt information is used to inform a user whether it is necessary to reselect the 3G or 2G network cell; and acquiring a reselection and camping instruction that is input according to the user prompt information by the user, and reselecting the 3G or 2G network cell and camping on the reselected cell according to the reselection and camping instruction.

With reference to any one of the first to sixth possible implementation manners of the fifth aspect, in a seventh possible implementation manner, the reselecting a 3G or 2G network cell and camping on the reselected network cell includes: reselecting the 3G network cell and camping on the 3G network cell; and when it is failed to reselect the 3G network cell, reselecting the 2G network cell and camping on the 2G network cell.

With reference to any one of the first to seventh possible implementation manners of the fifth aspect, in an eighth possible implementation manner, the method further includes: recording frequency information of a connected 4G network, where the frequency information includes at least one of carrier frequency information and frequency band information; turning on a mobile data service again; and acquiring the recorded frequency information, and accessing the 4G network corresponding to the frequency information.

According to a sixth aspect, the present invention provides an embodiment of a wireless communications device.

In a first possible implementation manner, the wireless communications device includes a modem Modem module, and the Modem module is configured to acquire a data turn-off instruction, where the data turn-off instruction is used to instruct to turn off a mobile data service; and turn off a mobile data service according to the data turn-off instruction, and adjust a signal measurement cycle of a current serving cell, where a length of a signal measurement cycle after adjustment is greater than a length of the signal measurement cycle before adjustment.

With reference to the first possible implementation manner of the sixth aspect, in a second possible implementation manner, the Modem module is further configured to acquire a data turn-on instruction used to instruct to turn on the mobile data service; and turn on the mobile data service according to the data turn-on instruction, and adjust the signal measurement cycle of the current serving cell to the signal measurement cycle before adjustment.

With reference to the first or second possible implementation manner of the sixth aspect, in a third possible implementation manner, the wireless communications device is applied to a dual card dual standby terminal, the dual card dual standby terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement cycle of a current serving cell corresponding to the second smart card.

With reference to any one of the first to third possible implementation manners of the sixth aspect, in a fourth possible implementation manner, the signal measurement cycle of the current serving cell is a discontinuous reception DRX cycle.

According to a seventh aspect, the present invention provides an embodiment of a wireless communications device.

In a first possible implementation manner, the wireless communications device includes a modem Modem module, and the Modem module is configured to acquire a data turn-off instruction used to instruct to turn off a mobile data service; and turn off a mobile data service according to the data turn-off instruction, and adjust a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment.

With reference to the first possible implementation manner of the seventh aspect, in a second possible implementation manner, the wireless communications device is applied to a dual card dual standby terminal, the dual card dual standby terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement threshold value of a current serving cell corresponding to the second smart card.

With reference to the first or second possible implementation manner of the seventh aspect, in a third possible implementation manner, the Modem module adjusts the signal measurement threshold value of the neighboring cell of the current serving cell after adjustment to be less than the signal measurement value of the neighboring cell of the current serving cell before adjustment by 2 decibels dB or 3 dB.

With reference to any one of the first to third possible implementation manners of the seventh aspect, in a third possible implementation manner, the Modem module is further configured to acquire a data turn-on instruction used to instruct to turn on the mobile data service; and turn on the mobile data service according to the data turn-on instruction, and adjust the signal measurement threshold value of the neighboring cell of the current serving cell to the signal measurement threshold value of the neighboring cell of the current serving cell before adjustment.

According to an eighth aspect, the present invention provides an embodiment of a wireless communications device.

In a first possible implementation manner, the wireless communications device includes a modem Modem module, and the Modem module is configured to acquire a data turn-off instruction used to instruct to turn off a mobile data service; and turn off a mobile data service according to the data turn-off instruction, and adjust a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment.

With reference to the first possible implementation manner of the eighth aspect, in a second possible implementation manner, the wireless communications device is applied to a dual card dual standby terminal, the dual card dual standby terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement parameter of a neighboring cell of a current serving cell corresponding to the second smart card.

With reference to the first or second possible implementation manner of the eighth aspect, in a third possible implementation manner, the signal measurement parameter includes a selection receive level Srxlev value, and that the Modem module adjusts the signal measurement parameter of the neighboring cell of the current serving cell includes:

acquiring a power value of a reference signal of the current serving cell, a minimum signal power value required by the current serving cell, and a power offset value required by the current serving cell; acquiring a selection receive level Srxlev value of the current serving cell according to the power value of the reference signal of the current serving cell, the minimum signal power value required by the current serving cell, and the power offset value required by the current serving cell; and adjusting the Srxlev value, where an Srxlev value after adjustment is greater than the Srxlev value before adjustment;
or

acquiring a power value of a reference signal of the current serving cell, a minimum signal power value required by the current serving cell, and a power offset value required by the current serving cell; and adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

With reference to the first or second possible implementation manner of the eighth aspect, in a fourth possible implementation manner, the signal measurement parameter includes a selection receive level Srxlev value and a selection quality Squal value, and that the Modem module adjusts the signal measurement parameter of the neighboring cell of the current serving cell includes:

acquiring a power value of a reference signal of the current serving cell, a minimum signal power value required by the current serving cell, and a power offset value required by the current serving cell; acquiring an Srxlev value according to the power value of the reference signal of the current serving cell, the minimum signal power value required by the current serving cell, and the power offset value required by the current serving cell; acquiring a quality value of the reference signal of the current serving cell, a minimum signal quality value required by the current serving cell, and a quality offset value required by the current serving cell; acquiring a Squal value of the current serving cell according to the quality value of the reference signal of the current serving cell, the minimum signal quality value required by the current serving cell, and the quality offset value required by the current serving cell; and adjusting the Srxlev value and the Squal value, where an Srxlev value after adjustment is greater than the Srxlev value before adjustment, and a Squal value after adjustment is greater than the Squal value before adjustment; or

acquiring a power value of a reference signal of the current serving cell, a minimum signal power value required by the current serving cell, and a power offset value required by the current serving cell; acquiring a quality value of the reference signal of the current serving cell, a minimum signal quality value required by the current serving cell, and a quality offset value required by the current serving cell; adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

With reference to any one of the first to fourth possible implementation manners of the eighth aspect, in a fifth possible implementation manner, the Modem module is further configured to acquire a data turn-on instruction used to instruct to turn on the mobile data service; and turn on the mobile data service according to the data turn-on instruction, and adjust the value of the signal measurement parameter of the neighboring cell of the current serving cell to the value of the signal measurement parameter of the neighboring cell of the current serving cell before adjustment.

According to a ninth aspect, the present invention provides an embodiment of a wireless communications device.

In a first possible implementation manner, the wireless communications device includes a modem Modem module and an application processor AP, where the Modem module is connected to the AP, the Modem module is configured to acquire a data turn-off instruction used to instruct to turn off a mobile data service; and turn off a mobile data service according to the data turn-off instruction; the AP is configured to acquire, by using a sensor, location information of a terminal including the wireless communications device; and when it is determined according to the location information that a location of the terminal does not change, send a signal measurement stop indication to the Modem module; and the Modem module is further configured to stop signal measurement according to the signal measurement stop indication sent by the AP.

With reference to the first possible implementation manner of the ninth aspect, in a second possible implementation manner, the AP is further configured to: after the Modem module stops signal measurement, acquire the location information of the terminal by using the sensor; and when it is determined according to the location information that the location of the terminal keeps changing within a preset time, send a signal measurement start indication to the Modem module; and the Modem module is further configured to start signal measurement according to the signal measurement start indication sent by the AP.

According to a tenth aspect, the present invention provides an embodiment of a wireless communications device.

In a first possible implementation manner, the wireless communications device includes a modem Modem module, and the Modem module is configured to acquire a data turn-off instruction used to instruct to turn off a mobile data service; and turn off a mobile data service according to the data turn-off instruction, reselect a 3G or 2G network cell, and camp on the reselected network cell.

With reference to the first possible implementation manner of the tenth aspect, in a second possible implementation manner, the wireless communications device is applied to a circuit domain fallback CSFB terminal that supports at least 4G; or the wireless communications device is applied to a dual card dual standby terminal that supports at least 4G.

With reference to the first or second possible implementation manner of the tenth aspect, in a third possible implementation manner, the wireless communications device is applied to a terminal that supports at least 4G, the terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and reselect the 3G or 2G network cell for the second smart card.

With reference to the third possible implementation manner of the tenth aspect, in a fourth possible implementation manner, the wireless communications device further includes an application processor AP, where the AP is connected to the Modem module, the AP is configured to generate a first attach request; the AP is further configured to generate a detach request; the AP is further configured to generate a second attach request; and the terminal further includes a transmitter, where the transmitter is configured to send the first attach request to a mobile network in which the first smart card is located; the transmitter is further configured to send the detach request to a 4G mobile network in which the second smart card is located; and the transmitter is further configured to send the second attach request to the 3G or 2G network reselected for the second smart card.

With reference to the third or fourth possible implementation manner of the tenth aspect, in a fifth possible implementation manner, the wireless communications device further includes an application processor AP, where the AP is connected to the Modem module, the AP is configured to generate user prompt information, where the user prompt information is used to inform a user that the second smart card turns off a mobile data service and the first smart card turns on a mobile data service.

With reference to any one of the first to fourth possible implementation manners of the tenth aspect, in a sixth possible implementation manner, the wireless communications device further includes an application processor AP, where the AP is connected to the Modem module, the AP is configured to generate user prompt information, where the user prompt information is used to inform a user whether it is necessary to reselect the 3G or 2G network cell, and camp on the reselected network cell; the AP is further configured to acquire a reselection and camping instruction that is input according to the user prompt information by the user, where the reselection and camping instruction is used to instruct the wireless communications device to reselect the 3G or 2G network cell, and camp on the reselected network cell; and the Modem module is configured to: after the AP acquires the reselection and camping instruction, reselect the 3G or 2G network cell and camp on the reselected cell according to the reselection and camping instruction.

With reference to the first to sixth possible implementation manners of the tenth aspect, in a seventh possible implementation manner, that the Modem module reselects the 3G or 2G network cell, and camps on the reselected network cell includes: the Modem module is configured to reselect the 3G network cell and camp on the 3G network cell; and the Modem module is further configured to: when it is failed to reselect the 3G network cell, reselect the 2G network cell and camp on the 2G network cell.

With reference to the first or second or third possible implementation manner of the tenth aspect, in an eighth possible implementation manner, the wireless communications device further includes an application processor AP, where the AP is connected to the Modem module, the AP is configured to: after the Modem module turns off a data service, record frequency information of a connected Long Term Evolution LTE network, where the frequency information includes at least one of carrier frequency information and frequency band information; and the Modem module is further configured to turn on a mobile data service; and acquire the frequency information, and access the LTE network corresponding to the frequency information.

With reference to the fourth or fifth or sixth possible implementation manner of the tenth aspect, in a ninth possible implementation manner, the AP is configured to: after the Modem module turns off a data service, record frequency information of a connected Long Term Evolution LTE network, where the frequency information includes at least one of carrier frequency information and frequency band information; and the Modem module is further configured to turn on a mobile data service; and acquire the frequency information, and access the LTE network corresponding to the frequency information.

According to an eleventh aspect, the present invention provides an embodiment of a terminal that supports at least a 4G network.

In a first possible implementation manner, the terminal includes a processor, and the processor is configured to acquire a data turn-off instruction used to instruct to turn off a mobile data service; and turn off a mobile data service according to the data turn-off instruction, and adjust a signal measurement cycle of a current serving cell, where a length of a signal measurement cycle after adjustment is greater than a length of the signal measurement cycle before adjustment.

With reference to the first possible implementation manner of the eleventh aspect, in a second possible implementation manner, the processor is further configured to acquire a data turn-on instruction used to instruct to turn on the mobile data service; and turn on the mobile data service according to the data turn-on instruction, and adjust the signal measurement cycle of the current serving cell to the signal measurement cycle before adjustment.

With reference to the first or second possible implementation manner of the eleventh aspect, in a third possible implementation manner, the terminal is a dual card dual standby terminal, the dual card dual standby terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement cycle of a current serving cell corresponding to the second smart card.

With reference to any one of the first to third possible implementation manners of the eleventh aspect, in a fourth possible implementation manner, the signal measurement cycle of the current serving cell is a discontinuous reception DRX cycle.

According to a twelfth aspect, the present invention provides an embodiment of a terminal that supports at least a 4G network.

In a first possible implementation manner, the terminal includes a processor, and the processor is configured to acquire a data turn-off instruction used to instruct to turn off a mobile data service; and turn off a mobile data service according to the data turn-off instruction, and adjust a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment.

With reference to the first possible implementation manner of the twelfth aspect, in a second possible implementation manner, the terminal is a dual card dual standby terminal, the dual card dual standby terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement threshold value of a current serving cell corresponding to the second smart card.

With reference to the first or second possible implementation manner of the twelfth aspect, in a third possible implementation manner, the processor adjusts a signal measurement threshold value of the neighboring cell of the current serving cell after adjustment to be less than the signal measurement value of the neighboring cell of the current serving cell before adjustment by 2 decibels dB or 3 dB.

With reference to any one of the first to third possible implementation manners of the twelfth aspect, in a fourth possible implementation manner, the processor is further configured to acquire a data turn-on instruction used to instruct to turn on the mobile data service; and turn on the mobile data service according to the data turn-on instruction, and adjust the signal measurement threshold value of the neighboring cell of the current serving cell to the signal measurement threshold value of the neighboring cell of the current serving cell before adjustment.

According to a thirteenth aspect, the present invention provides an embodiment of a terminal that supports at least a 4G network.

In a first possible implementation manner, the terminal includes a processor, and the processor is configured to acquire a data turn-off instruction used to instruct to turn off a mobile data service; and turn off a mobile data service according to the data turn-off instruction, and adjust a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment.

With reference to the first possible implementation manner of the thirteenth aspect, in a second possible implementation manner, the terminal is a dual card dual standby terminal, the dual card dual standby terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement parameter of a neighboring cell of a current serving cell corresponding to the second smart card.

With reference to the first or second possible implementation manner of the thirteenth aspect, in a third possible implementation manner, the signal measurement parameter includes a selection receive level Srxlev value, and that the processor adjusts the signal measurement parameter of the neighboring cell of the current serving cell includes:

acquiring a power value of a reference signal of the current serving cell, a minimum signal power value required by the current serving cell, and a power offset value required by the current serving cell; acquiring a selection receive level Srxlev value of the current serving cell according to the power value of the reference signal of the current serving cell, the minimum signal power value required by the current serving cell, and the power offset value required by the current serving cell; and adjusting the Srxlev value, where an Srxlev value after adjustment is greater than the Srxlev value before adjustment;
or
acquiring a power value of a reference signal of the current serving cell, a minimum signal power value required by the current serving cell, and a power offset value required by the current serving cell; and adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

With reference to the first or second possible implementation manner of the thirteenth aspect, in a fourth possible implementation manner, the signal measurement parameter includes a selection receive level Srxlev value and a selection quality Squal value, and that the processor adjusts the signal measurement parameter of the neighboring cell of the current serving cell includes:

acquiring a power value of a reference signal of the current serving cell, a minimum signal power value required by the current serving cell, and a power offset value required by the current serving cell; acquiring an Srxlev value according to the power value of the reference signal of the current serving cell, the minimum signal power value required by the current serving cell, and the power offset value required by the current serving cell; acquiring a quality value of the reference signal of the current serving cell, a minimum signal quality value required by the current serving cell, and a quality offset value required by the current serving cell; acquiring a Squal value of the current serving cell according to the quality value of the reference signal of the current serving cell, the minimum signal quality value required by the current serving cell, and the quality offset value required by the current serving cell; and adjusting the Srxlev value and the Squal value, where an Srxlev value after adjustment is greater than the Srxlev value before adjustment, and a Squal value after adjustment is greater than the Squal value before adjustment;
or
acquiring a power value of a reference signal of the current serving cell, a minimum signal power value required by the current serving cell, and a power offset value required by the current serving cell; acquiring a quality value of the reference signal of the current serving cell, a minimum signal quality value required by the current serving cell, and a quality offset value required by the current serving cell; adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

With reference to any one of the first to fourth possible implementation manners of the thirteenth aspect, in a fifth possible implementation manner, the processor is further configured to acquire a data turn-on instruction used to instruct to turn on the mobile data service; and turn on the mobile data service according to the data turn-on instruction, and adjust the value of the signal measurement parameter of the neighboring cell of the current serving cell to the value of the signal measurement parameter of the neighboring cell of the current serving cell before adjustment.

According to a fourteenth aspect, the present invention provides an embodiment of a terminal that supports at least a 4G network.

In a first possible implementation manner, the terminal includes a processor and a sensor, where the processor being connected to the sensor, the processor is configured to acquire a data turn-off instruction used to instruct to turn off a mobile data service; and turn off a mobile data service according to the data turn-off instruction; the sensor is configured to acquire location information of the terminal; and the processor is further configured to stop signal measurement when it is determined according to the location information acquired by the sensor that a location of the terminal does not change.

With reference to the first possible implementation manner of the fourteenth aspect, in a second possible implementation manner, the sensor is further configured to: after the processor stops signal measurement, acquire the location information of the terminal; and the processor is further configured to: when it is determined according to the location information acquired by the sensor that the location of the terminal keeps changing within a preset time, start signal measurement.

According to a fifteenth aspect, the present invention provides an embodiment of a terminal that supports at least a 4G network.

In a first possible implementation manner, the terminal includes a processor, and the processor is configured to acquire a data turn-off instruction used to instruct to turn off a mobile data service; and turn off a mobile data service according to the data turn-off instruction, reselect a 3G or 2G network cell, and camp on the reselected network cell.

With reference to the first possible implementation manner of the fifteenth aspect, in a second possible implementation manner, the terminal that supports at least a 4G network is a circuit domain fallback CSFB terminal that supports at least 4G; or is a dual card dual standby terminal that supports at least 4G.

With reference to the first or second possible implementation manner of the fifteenth aspect, in a third possible implementation manner, the terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and reselect the 3G or 2G network cell for the second smart card.

With reference to the third possible implementation manner of the fifteenth aspect, in a fourth possible implementation manner, the terminal further includes a transmitter, and the transmitter is configured to send a first attach request to a mobile network in which the first smart card is located; the transmitter is further configured to send a detach request to a 4G mobile network in which the second smart card is located; the transmitter is further configured to send a second attach request to the 3G or 2G network reselected for the second smart card.

With reference to the third or fourth possible implementation manner of the fifteenth aspect, in a fifth possible implementation manner, the terminal further includes an output device, and the output device is configured to present user prompt information, where the user prompt information is used to inform a user that the second smart card turns off a mobile data service and the first smart card turns on a mobile data service.

With reference to any one of the first to fourth possible implementation manners of the fifteenth aspect, in a sixth possible implementation manner, the terminal further includes an output device, and the output device is configured to present user prompt information, where the user prompt information is used to inform a user whether it is necessary to reselect the 3G or 2G network cell, and camp on the reselected network cell; and the processor is specifically configured to acquire a reselection and camping instruction that is input according to the user prompt information by the user, and reselect the 3G or 2G network cell and camp on the reselected cell according to the reselection and camping instruction.

With reference to the first to sixth possible implementation manners of the fifteenth aspect, in a seventh possible implementation manner, that the processor reselects the 3G or 2G network cell and camps on the reselected network cell includes: the processor is configured to reselect the 3G network cell and camp on the 3G network cell; and the processor is further configured to: when it is failed to reselect the 3G network cell, reselect the 2G network cell and camp on the 2G network cell.

With reference to any one of the first to seventh possible implementation manners of the fifteenth aspect, in an eighth possible implementation manner, after turning off a data service, the processor is further configured to record frequency information of a connected Long Term Evolution LTE network, where the frequency information includes at least one of carrier frequency information and frequency band information; turn on a mobile data service; and acquire the frequency information, and access the LTE network corresponding to the frequency information.

In the embodiments provided in the present invention, in an environment of a 4G network, when turning off a mobile data service, user equipment may adjust a signal measurement cycle of a current serving cell, so that a signal measurement cycle after adjustment is N times as long as the signal measurement cycle before adjustment, thereby reducing a quantity of times of signal measurement of the user equipment within a preset period of time; therefore, power consumption is reduced, a standby time of a terminal is extended, and user experience is improved.

## BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a flowchart of a method for adjusting a signal measurement cycle according to an embodiment of the present invention;
FIG. 2 is a flowchart of a method for adjusting a signal measurement threshold according to an embodiment of the present invention;
FIG. 3 is a flowchart of a method for adjusting a signal measurement threshold according to an embodiment of the present invention;
FIG. 4 is a flowchart of a signal measurement method according to an embodiment of the present invention;
FIG. 5 is a flowchart of a circuit domain fallback CSFB network handover method according to an embodiment of the present invention;
FIG. 6 is a schematic structural diagram of a wireless communications device according to an embodiment of the present invention;
FIG. 7 is a schematic structural diagram of a wireless communications device according to an embodiment of the present invention;
FIG. 8 is a schematic structural diagram of a terminal according to an embodiment of the present invention;
FIG. 9 is a schematic structural diagram of a terminal according to an embodiment of the present invention; and
FIG. 10 is a schematic structural diagram of a terminal according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

The embodiments of the present invention may be applied to various communications systems, such as: a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless), a general packet radio service (GPRS, General Packet Radio Service), and a Long Term Evolution (LTE, Long Term Evolution).

It should be noted that any method provided in the embodiments of the present invention may be executed by a wireless terminal, or may be performed by a wireless communications device in a wireless terminal. The wireless communications device may include a circuit or an integrated circuit (Integrated Circuit, IC for short), for example, may include a single packaged IC, or may include connected multiple packaged ICs having a same function or different functions. For example, the wireless communications device may include a modem (Modem) chip, or may include a Modem chip and a CPU, or include a Modem chip and a digital signal processor (Digital Signal Processor, DSP for short), or include a Modem chip and an AP (Application Processor, application processor) chip. The wireless terminal may communicate with one or more core networks by using a radio access network (for example, RAN, Radio Access Network), and the wireless terminal may be specifically a mobile terminal, for example, a mobile phone (or referred to as a "cellular" phone), or may be a computer having a mobile terminal, for example, a portable, pocket-sized, handheld, computer built-in or vehile-mounted mobile apparatus, which exchanges voice and/or data with the radio access network.

The terminal further includes a dual standby terminal, where the dual standby terminal may be a dual card dual standby terminal, or may be a single card dual standby terminal, or may be specifically an SGLTE (Simultaneous GSM and LTE, dual standby) terminal, or an SVLTE (Simultaneous Voice and LTE, dual standby) terminal. The terminal may also be a terminal that provides only a PS service, for example, a data card. Specifically, an AP and a Modem module of the terminal may be independent constituents that are separate from each other in a structure of the terminal. Alternatively, the AP and the Modem module may be integrated inside one chip. An entity for executing the methods in the embodiments of the present invention is not limited in the embodiments of the present invention.

It should be noted that 4G in the embodiments of the present invention refers to a fourth generation mobile communications technology, and may include two standards: TD-LTE (Time Division Long Term Evolution, time division Long Term Evolution) and FDD-LTE (Frequency Division Duplexing-Long Term Evolution, frequency division duplex-Long Term Evolution).

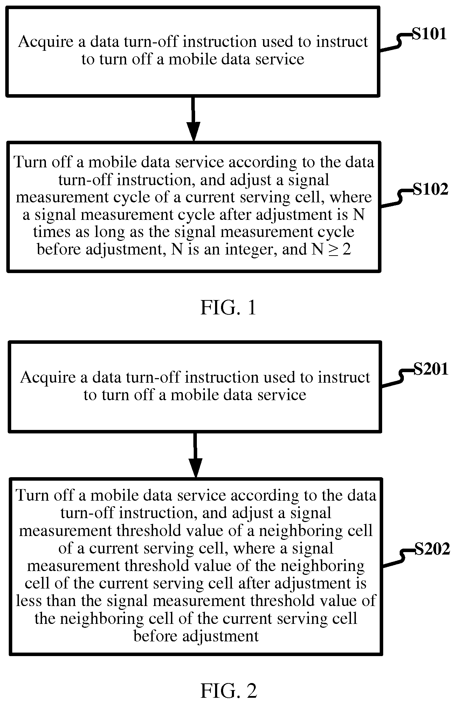

In an embodiment of the present invention, as shown in FIG. 1, FIG. 1 is a schematic flowchart of a method for adjusting a signal measurement cycle according to this embodiment of the present invention. The method is applied to a terminal that supports at least a 4G network, and in the terminal that supports at least 4G, a dual standby technology may be used, or a CSFB technology may be used, which is not limited in this embodiment of the present invention. The method includes:

S101: Acquire a data turn-off instruction used to instruct to turn off a mobile data service.

The data turn-off instruction may be a data turn-off instruction input by a user, or may be a data turn-off instruction triggered by an application program, which is not limited in this embodiment of the present invention.

The mobile data service is a general packet radio service in which a terminal is carried in an environment of a 2G or 3G or 4G network. For example, in this embodiment of the present invention, when user equipment is carried in an environment of a 4G network, an end-to-end, wide-area wireless IP connection may be established between the user equipment and a server by using a PS technology.

S102: Turn off a mobile data service according to the data turn-off instruction, and adjust a signal measurement cycle of a current serving cell, where a signal measurement cycle after adjustment is N times as long as the signal measurement cycle before adjustment, N is an integer, and $N \geq 2$.

A terminal or a wireless communications device turns off a mobile data service according to the data turn-off instruction. For example, when the terminal or the wireless communications device includes an application processor (Application processor, AP) and a modem Modem module, the AP and the Modem module may be disconnected, or the AP may block a connection between the AP and the Modem module, the AP does not send a data service request, the mobile data service is turned off, and the terminal or the wireless communications device terminates data transmission with a server. At the same time when the mobile data service is turned off or after the mobile data service is turned off, the terminal or the wireless communications device may adjust a signal measurement cycle, where a signal measurement cycle after adjustment is N times as long as the signal measurement cycle before adjustment, N is an integer, and $N \geq 2$. In this embodiment of the present invention, the signal measurement is: a network side sends a reference signal to the terminal or the wireless communications device, and the terminal or the wireless communications device measures strength of the reference signal, where power of the reference signal may be specifically measured, or power and quality of the reference signal may be specifically measured.

In this embodiment provided in the present invention, in an environment of a 4G network, user equipment turns off a mobile data service and adjusts a signal measurement cycle of a current serving cell, so that a signal measurement cycle after adjustment is N times as long as the signal measurement cycle before adjustment, thereby reducing a quantity of times of signal measurement of the user equipment within a preset period of time; therefore, power consumption is reduced, a standby time of a terminal is extended, and user experience is improved.

In an implementation manner of this embodiment of the present invention, the terminal may be a dual card dual standby terminal, and the dual card dual standby terminal includes a first smart card and a second smart card. For example, two smart cards are inserted in the dual card dual standby terminal. The acquiring a data turn-off instruction used to instruct to turn off a mobile data service may be specifically: acquiring a data turn-off instruction used to instruct to turn on a mobile data service of the first smart card and to turn off a mobile data service of the second smart card; and the turning off a mobile data service according to the data turn-off instruction and adjusting a signal measurement cycle of a current serving cell is specifically: turning on a mobile data service of the first smart card and turning off a mobile data service of the second smart card according to the data turn-off instruction, and adjusting a signal measurement cycle of a current serving cell corresponding to the second smart card. The smart card may be a SIM (Subscriber Identity Module, subscriber identity module) card, a UICC card (Universal Integrated Circuit Card, universal integrated circuit card), a mobile data card, or the like, and may provide the terminal with a function such as wireless network access. The turning on a mobile data service of the first smart card may be turning on a mobile data service between the terminal or a wireless communications device and a network to which the first smart card belongs. The data turn-off instruction used to instruct to turn on a mobile data service of the first smart card and to turn off a mobile data service of the second smart card may be one instruction, that is, an instruction to turn on a mobile data service of the first smart card, where when a mobile data service of the first smart card is turned on, a mobile data service of the second smart card is turned off by default, and therefore the instruction to turn on a mobile data service of the first smart card is also an instruction to turn off a mobile data service of the second smart card; or the data turn-off instruction may be two instructions, that is, an instruction to turn on a mobile data service of the first smart card and an instruction to turn off a mobile data service of the second smart card, which is not limited in this embodiment of the present invention. Specifically, two smart cards are connected to the terminal. When the first smart card turns on a mobile data service, the second smart card cannot turn on a mobile data service. When turning on the mobile data service of the first smart card, the terminal or the wireless communications device turns off the mobile data service of the second smart card, and adjusts a signal measurement cycle of a current serving cell of the second smart card, where a signal measurement cycle after adjustment is N times as long as the signal measurement cycle before adjustment, N is an integer, and N ≥ 2. Optionally, the first smart card and the second smart card both camp on a 4G network cell. Optionally, the signal measurement cycle of the current serving of the second smart card is a discontinuous reception (DRX) cycle. For example, the first smart card is a smart card of China Mobile and supports GSM/TDS-CDMA/TDD-LTE, and the second smart card is a smart card of China Telecom and supports CDMA/EVDO/FDD-LTE or CDMA/EVDO/TDD-LTE. In this case, after a mobile data service of China Mobile is turned on, a mobile data service of China Telecom is automatically turned off, and a signal measurement cycle in EVDO/FDD-LTE or EVDO/TDD-LTE of China Telecom is adjusted to N times as long as that before adjustment. In this implementation manner, after learning that the first smart card turns on the mobile data service, the terminal or the wireless communications device may turn off the mobile data service of the second smart card and adjust a signal measurement cycle of the second smart card instead of activating a PS protocol stack of the second smart card. On the basis of effectively reducing power consumption, a user can be enabled to perceive that currently the mobile data service of the second smart card is already turned off, thereby improving user experience.

In an implementation manner of this embodiment of the present invention, the signal measurement cycle of the current serving cell is a discontinuous reception DRX cycle. UE-based power-saving consideration of DRX is introduced in a Long Term Evolution (Long Term Evolution, LTE) system. DRX includes two types, that is, paging (paging) DRX in both an IDLE state and a connected state, and DRX in a connected state. The paging DRX in both an IDLE state and a connected state is completely controlled by a network access server (Network Access Server, NAS), and the UE is controlled to listen on a physical downlink control channel (Physical Downlink Control Channel, PDCCH) scrambled by using a P-RNTI (Paging Radio Network Tempory Identity, paging radio network temporary identity). The paging in a connected state is controlled by an evolved NodeB (evolved NodeB, eNB), an RRC delivers signaling to notify the UE of configurations of various DRX parameters, and a MAC layer may also control DRX by using a MAC CE.

For the paging DRX, according to a specification of the 36.304 protocol, a frame number and a subframe number in paging of the paging DRX may be calculated, and each UE has its own specific transmission moment. A cycle of the paging DRX depends on Tc and Tue, where Tc is a value specified in the RRC protocol 331, and Tue is a message carried in an attach request message in an attach process of the UE and is a NAS message. The UE transmits the NAS message to a core network MME. In such a process, a base station is responsible for only transfer, and does not specifically parse and acquire message content. The core network MME then sends the NAS message to an evolved NodeB (evolved Node B, eNB) to notify a UE specific DRX. After acquiring the message sent by the core network MME, the eNB determines a value of T according to T = min (Tc, Tue). After the UE obtains, by using a paging message (paging message) in a paging control channel (Paging Control Channel, PCCH) of a SIB2 (System Information Blocks, system information module), a default paging cycle (default paging cycle) configured by an RRC, a smaller one of the default paging cycle and a UE specific discontinuous reception cycle (UE specific DRX) that is requested by the UE is used as a cycle for listening on a paging channel, where the paging DRX in an IDLE state is a discontinuous reception cycle when the UE is in an idle state. Because when the UE is in an idle state, the UE does not have an RRC connection and a dedicated resource of a user, the UE mainly listens on a call channel and a broadcast channel, and as long as a fixed cycle is defined, an objective of discontinuous reception can be achieved. In one DRX cycle, the UE measures signal strength of a current cell once and receives a paging signal once. However, if the UE wants to receive user data, the UE is required to first enter a connected state from an IDLE state (or another nonconnected state).

In this embodiment of the present invention, after the terminal or the wireless communications device turns off a data service, the Modem module works in a normal IDLE state mode, and detects strength of the current cell in a currently set DRX cycle. The UE detects signal power and/or signal quality of a cell in which the UE is located. When a current network is a 4G LTE network, the UE detects signal power and/or signal quality of a current serving cell. When a current network is a 3G network and a standard is TDD, the UE may detect only signal power of a current serving cell; when a current network is a 3G network and a standard is FDD, the UE may detect signal power and/or signal quality of a current serving cell; and when a current network is a 2G network, the UE may detect signal power of a current serving cell. Specifically, the DRX value may be obtained by reading a system broadcast message, or obtained by reading a parameter stored by the terminal. The UE may adjust a DRX cycle according to a preset rule, so that a DRX cycle after adjustment is N times as long as the DRX cycle before adjustment. The preset rule includes, but is not limited to, the following several types as follows:

In an implementation manner of this embodiment of the present invention, the DRX cycle before adjustment is used as a reference, and the DRX cycle after adjustment is an integer multiple of the reference DRX cycle, where the multiplier is greater than or equal to 2, for example, 2 times or 4 times. As shown in Table 1, a DRX cycle table may be preset for the terminal or the wireless communications device, where a discontinuous reception cycle length (DRX cycle length) is used to represent an interval at which the UE changes from a sleep state into an active state each time, for example, 0.32 second, 0.64 second, 1.28 seconds, and 2.56 seconds. Nserv is a quantity of discontinuous reception cycles (number of DRX cycles) and represents a quantity of times of signal measurement of the UE within the discontinuous reception cycle length. If the UE detects, within Nserv, no cell that meets cell reselection, the UE performs neighboring cell reselection. For example, 0.32 second is used as a cycle, and the UE performs measurement four times within the cycle. If the UE detects, four times, no cell that meets cell reselection, the UE performs neighboring cell reselection. The terminal or the wireless communications device may make a cycle adjustment according to a DRX cycle in Table 1. For example, the current DRX cycle is 0.32 second, and after the terminal or the wireless communications device turns off a mobile data service according to the data turn-off instruction, the DRX cycle may be adjusted to 0.64 second or 1.28 seconds or 2.56 seconds. For another example, in the preset DRX cycle table, a maximum value of the DRX cycle is 2.56 seconds, and the current DRX cycle is 0.32 second. After a mobile data service is turned off, the DRX cycle may be adjusted to the maximum DRX cycle in the preset DRX cycle table, for example, 2.26 seconds in Table 1. For another example, the maximum value of the DRX cycle is 2.56 seconds, and the current DRX cycle is 0.32 second. After a mobile data service is turned off, the DRX cycle may be adjusted to an integer multiple of the maximum DRX cycle in the preset DRX cycle table, for example, an integer multiple of 2.26 seconds in Table 1, for example, 4.52 seconds (two times of 2.26 seconds). Optionally, when the DRX cycle is less than 2.56 seconds, for example, the current DRX cycle is 0.32 second or 0.64 second, the DRX cycle after adjustment is an integer multiple of the current DRX cycle, for example, the DRX cycle after adjustment is 0.96 second (three times of 0.32 second) or 1.92 seconds (three times of 0.64 second), and the DRX cycle after adjustment (for example, 0.96 second or 1.92 seconds) is less than the maximum DRX cycle (for example, 2.56 seconds in Table 1) in the preset DRX cycle table, the terminal or the wireless communications device may change the DRX cycle after adjustment to the maximum DRX cycle (for example, 2.56 seconds in Table 1) in the preset cycle table, or may change the DRX cycle after adjustment to an integer multiple of the maximum ERX cycle in the preset cycle table, for example, an integer multiple of 2.56 seconds in Table 1, for example, 4.52 seconds.

Table 1

| DRX cycle length[s] | N_{serv}[number of DRX cycles] |
|---|---|
| 0.32 | 4 |
| 0.64 | 4 |
| 1.28 | 2 |
| 2.56 | 2 |

In an implementation manner of this embodiment of the present invention, the DRX cycle before adjustment is used as an reference, the DRX cycle after adjustment is a sum of lengths of the reference DRX cycle and a preset cycle, and the length of the DRX cycle after adjustment is an integer multiple of the reference DRX cycle. The numerical values in Table 1 are still used as an example. If the DRX cycle before adjustment is 2.56 seconds, the DRX cycle after adjustment may be a sum of 2.26 seconds and the length (for example, 2.56 or 5.12) of the preset cycle.

In the foregoing implementation manners in this embodiment of the present invention, the UE may preset a maximum DRX cycle that is allowed to adjust, and the UE may extend a DRX cycle one time after another by using the foregoing preset adjustment rule. For reference DRX in each adjustment, an initial DRX cycle may be used as a reference, or a DRX cycle in previous adjustment may be used as a reference, and the UE may perform adjustment multiple times until the DRX after adjustment is equal to the maximum DRX cycle that is allowed by the UE to adjust; the UE may also use an initial DRX cycle as a reference, and adjust the DRX cycle once to the maximum DRX cycle that is allowed by the UE to adjust.

In the foregoing implementation manners of this embodiment of the present invention, after the turning off a mobile data service, the method further includes: acquiring a data turn-on instruction used to instruct to turn on the mobile data service; and turning on the mobile data service according to the data turn-on instruction, and adjusting the signal measurement cycle of the current serving cell to the signal measurement cycle before adjustment. In the foregoing implementation manners of this embodiment of the present invention, after the UE adjusts the signal measurement cycle of the current serving cell and before the signal measurement cycle before adjustment is restored, the UE performs signal measurement according to the signal measurement cycle after adjustment. After turning on a mobile data service, the user equipment adjusts the signal measurement cycle of the current serving cell to the signal measurement cycle before adjustment, and performs signal measurement according to the signal measurement cycle before adjustment. When the signal measurement cycle is a DRX cycle, the DRX cycle of the current serving cell is adjusted to the DRX cycle before adjustment, and signal measurement is performed according to the signal measurement cycle before adjustment.

In an embodiment of the present invention, as shown in FIG. 2, FIG. 2 is a schematic flowchart of a method for adjusting a signal measurement threshold according to this embodiment of the present invention. The method is applied to a terminal that supports at least a 4G network, and in the terminal that supports at least 4G, a dual standby technology may be used, or a CSFB technology may be used, which is not limited in this embodiment of the present invention. The method includes:

S201: Acquire a data turn-off instruction used to instruct to turn off a mobile data service.

The data turn-off instruction may be a data turn-off instruction input by a user, or may be a data turn-off instruction triggered by an application program, which is not limited in this embodiment of the present invention.

The mobile data service is a general packet radio service in which a terminal is carried in an environment of a 2G or 3G or 4G network. For example, in this embodiment of the present invention, when user equipment is carried in an environment of a 4G network, an end-to-end, wide-area wireless IP connection may be established between the user equipment and a server by using a PS technology.

S202: Turn off a mobile data service according to the data turn-off instruction, and adjust a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment.

A terminal or a wireless communications device turns off a mobile data service according to the data turn-off instruction, and terminates data transmission with a server. The terminal or the wireless communications device determines, by using an Srx criterion, a signal measurement initiation condition of a neighboring cell. User equipment UE is used as an example. Srx represents a path loss standard parameter of a current cell on which the UE camps, and may be used to identify a distance from the UE to a base station to which the current cell on which the UE camps belongs. A relatively large Srx value indicates that the UE is relatively close to the base station to which the current cell on which the UE camps belongs. Relatively small Srx indicates that the UE is relatively far from the base station to which the current cell on which the UE camps belongs. Formulas for calculating a selection receive level (Srxlev) value and a selection quality (Squal) value are separately:

$$\text{Srxlev} = Q_{\text{rxlevmeas}} - (Q_{\text{rxlevmin}} + Q_{\text{rxlevminoffset}}) - \text{Pcompensation} \ (1)$$

$$\text{Squal} = Q_{\text{qualmeas}} - (Q_{\text{qualmin}} + Q_{\text{qualminoffset}}) \ (2)$$

where $Q_{\text{rxlevmeas}}$ represents a power value (Reference Signal Received Power, RSRP), measured by the UE, of a reference signal of the cell; $Q_{\text{qualmeas}}$ represents a quality value (Reference Signal Received Quality, RSRQ), measured by the UE, of the reference signal of the cell; $Q_{\text{rxlevmin}}$ represents a minimum signal power required by the cell in which the UE is located, $Q_{\text{qualmeas}}$ represents a minimum signal quality required by the cell in which the UE is located, and the UE may acquire $Q_{\text{rxlevmin}}$ and $Q_{\text{qualmeas}}$ by acquiring a broadcast message of a mobile communications system. $Q_{\text{rxlevminoffset}}$ is a minimum power offset required by the cell in which the UE is located; $Q_{\text{qualminoffset}}$ is a minimum quality offset required by the cell in which the UE is located; when the UE is in a roaming state, adjustment needs to be performed according to an offset value set in a network during a periodic search for an operator network having a high priority. Pcompensation is a new factor for considering a difference between an actual maximum transmit power of the UE and a maximum transmit power allowed by the cell, that is, a power compensation value required by the cell in which the UE is located.

In the existing standard protocols, a standard meeting that the UE does not perform signal measurement on an intra-frequency neighboring cell is defined to be that Srxlev > $S_{\text{IntraSearchP}}$ and Squal > $S_{\text{IntraSearchQ}}$ are both met, where $S_{\text{IntraSearchP}}$ is a power threshold value for the UE to perform signal measurement on an intra-frequency neighboring cell, and $S_{\text{IntraSearchQ}}$ is a quality threshold value for the UE to perform signal measurement on an intra-frequency neighboring cell. In the existing protocols, a standard meeting that the UE does not perform signal measurement on an inter-frequency neighboring cell is defined to be that Srxlev > $S_{\text{nonIntraSearchP}}$ and Squal > $S_{\text{nonIntraSearchQ}}$ are both met, where $S_{\text{nonIntraSearchP}}$ is a power threshold value for the UE to perform signal measurement on an inter-frequency neighboring cell, and $S_{\text{nonIntraSearchQ}}$ is a quality threshold value for the UE to perform signal measurement on the inter-frequency neighboring cell.

In this embodiment of the present invention, the UE may adjust a signal measurement threshold value of a neighboring cell, so that the signal measurement threshold value of the neighboring cell of the current serving cell after adjustment is less than the signal measurement threshold value of the neighboring cell of the current serving cell before adjustment, that is, a quantity of times of signal measurement on an intra-frequency neighboring cell or an inter-frequency neighboring cell is reduced by adjusting the signal measurement threshold value. The UE may adjust $S_{IntraSearchP}$ and $S_{IntraSearchQ}$, so that actual signal measurement threshold values $S_{IntraSearchP}$ and $S_{IntraSearchQ}$ after adjustment are less than the signal measurement threshold values before adjustment. In this way, the UE meets more easily a trigger condition of not performing signal measurement on an intra-frequency neighboring cell or signal measurement on an inter-frequency neighboring cell in the protocols, that is, meets $Srxlev > S_{IntraSearchP}$ and $Squal > S_{IntraSearchQ}$ more easily; or meets more easily $Srxlev > S_{nonIntraSearchP}$ and $Squal > S_{nonIntraSearchQ}$. In this case, the UE does not meet a condition of triggering signal measurement on an intra-frequency neighboring cell or signal measurement on an inter-frequency neighboring cell.

For example, after acquiring the foregoing parameters and calculating, according to formula (1), Srxlev of a cell in which the UE is currently located, the UE may adjust, according to a preset rule, for example, a preset algorithm, Srxlev calculated by the UE. For example, the UE performs addition and subtraction operations on a preset parameter and a current signal measurement threshold value. For example, the UE may set that a first coefficient is added to $S_{IntraSearchP}$, where the first coefficient is a negative value; or the UE may set that a first coefficient is subtracted from $S_{IntraSearchP}$, where the first coefficient is a positive value, so that a signal measurement threshold value after adjustment (a signal measurement threshold value after addition and subtraction operations) is less than the signal measurement threshold value before adjustment. Optionally, the UE performs a multiplication operation on a preset parameter and a current signal measurement threshold value. For example, the UE may set that $S_{IntraSearchP}$ is multiplied by a first coefficient. Because $S_{IntraSearchP}$ is greater than 0, and the first coefficient may be less than 1, a signal measurement threshold value after adjustment (a signal measurement threshold value after the multiplication operation) is less than the signal measurement threshold value before adjustment. Similarly, $S_{nonIntraSearchQ}$ may be adjusted. The UE acquires current Srxlev, and keeps Srxlev unchanged; or the UE acquires current Srxlev and current Squal, and keeps Srxlev and Squal unchanged. In this case, the UE meets more easily a trigger condition of not performing signal measurement on an intra-frequency neighboring cell or signal measurement on an inter-frequency neighboring cell in the protocols, that is, meets more easily $Srxlev > S_{IntraSearchP}$; or meets more easily $Srxlev > S_{nonIntraSearchP}$ and $Squal > S_{nonIntraSearchQ}$. In this case, the UE does not meet a condition of triggering signal measurement on an intra-frequency neighboring cell or signal measurement on an inter-frequency neighboring cell, and a quantity of times of signal measurement is reduced.

In the foregoing implementation manners of this embodiment of the present invention, after the UE adjusts the signal measurement threshold value of the neighboring cell of the current serving cell and before the signal measurement threshold value of the neighboring cell of the current serving cell before adjustment is restored, the UE performs signal measurement on the neighboring cell according to the signal measurement threshold value of the neighboring cell of the current serving cell after adjustment.

In this embodiment provided in the present invention, in an environment of a 4G network, user equipment turns off a mobile data service and adjusts a signal measurement threshold value of a neighboring cell of a current serving cell, so that a signal measurement threshold value of the neighboring cell of the current serving cell after adjustment is less than the signal measurement threshold value of the neighboring cell of the current serving cell before adjustment, thereby reducing a quantity of times of signal measurement that is performed on the neighboring cell by the user equipment within a preset period of time; therefore, power consumption is reduced, a standby time of a terminal is extended, and user experience is improved.

In an implementation manner of this embodiment of the present invention, the terminal may be a dual card dual standby terminal, and the dual card dual standby terminal includes a first smart card and a second smart card. For example, two smart cards are inserted in the dual card dual standby terminal. The acquiring a data turn-off instruction used to instruct to turn off a mobile data service may be specifically: acquiring a data turn-off instruction used to instruct to turn on a mobile data service of the first smart card and to turn off a mobile data service of the second smart card; and the turning off a mobile data service according to the data turn-off instruction and adjusting a signal measurement threshold value of a neighboring cell of a current serving cell is specifically: turning on a mobile data service of the first smart card and turning off a mobile data service of the second smart card according to the data turn-off instruction, and adjusting a signal measurement threshold value of a neighboring cell of a current serving cell corresponding to the second smart card. The smart card may be a SIM (Subscriber Identity Module, subscriber identity module) card, a UICC card (Universal Integrated Circuit Card, universal integrated circuit card), a mobile data card, or the like, and may provide the terminal with a function such as wireless network access. The turning on a mobile data service of the first smart card may be turning on a mobile data service between the terminal or a wireless communications device and a network to which the first smart card belongs. Specifically, two smart cards are connected to the terminal. When the first smart card turns on a mobile data service, the second smart card cannot turn on a mobile data service. When turning on a mobile data service of the first smart card, the terminal or the wireless communications device turns off a mobile data service of the second smart card, and adjusts a signal measurement threshold value of a neighboring cell of a current serving cell of the second smart card. Optionally, the first smart card and the second smart card both camp on a 4G network cell. For example, the first smart card is a smart card of China Mobile and supports GSM/TDS-CDMA/TDD-LTE, and the second smart card is a smart card of China Telecom and supports CDMA/EVDO/FDD-LTE or CDMA/EVDO/TDD-LTE. In this case, after a mobile data service of China Mobile is turned on, a mobile data service of China Telecom is automatically turned off, and a signal measurement threshold value of a neighboring cell of a current serving cell in EVDO/FDD-LTE or EVDO/TDD-LTE of China Telecom is adjusted, so that a signal measurement threshold value of the neighboring cell of the current serving cell after adjustment is less than the signal measurement threshold value of the neighboring cell of the current serving cell before adjustment. In this implementation manner, after learning that the first smart card turns on the mobile data service, the terminal or the wireless communications device may turn off the mobile data service of the second smart card and adjust the signal measurement threshold value of the neighboring cell of the current serving cell of the second smart card instead of activating a PS protocol stack of the second smart card. On the basis of effectively reducing power consumption, a user can be enabled to perceive that currently the mobile data service of the second smart card is already turned off, thereby improving user experience.

In an implementation manner of this embodiment of the present invention, the signal measurement threshold value of the neighboring cell of the current serving cell after adjustment is less than the signal measurement threshold value of the neighboring cell of the current serving cell before adjustment by 2 decibels (dB) or 3 decibels (decibel, dB). When the signal measurement threshold value after adjustment is less than the signal measurement threshold value before adjustment by 3 dB, the terminal or the wireless communications device may reduce current power consumption by half.

In the foregoing implementation manners of this embodiment of the present invention, the method further includes: acquiring a data turn-on instruction used to instruct to turn on the mobile data service; and turning on the mobile data service according to the data turn-on instruction, and adjusting the signal measurement threshold value of the neighboring cell of the current serving cell to the signal measurement threshold value of the neighboring cell of the current serving cell before adjustment. In the foregoing implementation manners of this embodiment of the present invention, after the UE adjusts a signal measurement threshold value of a neighboring cell of a current serving cell and the signal measurement threshold value of the neighboring cell before adjustment is restored, the UE performs signal measurement according to the signal measurement threshold value of the neighboring cell of the current serving cell after adjustment. After turning on a mobile data service, the user equipment adjusts a signal measurement cycle of the current serving cell to the signal measurement threshold value of the neighboring cell of the current serving cell before adjustment, and performs signal measurement according to the signal measurement threshold value of the neighboring cell of the current serving cell before adjustment.

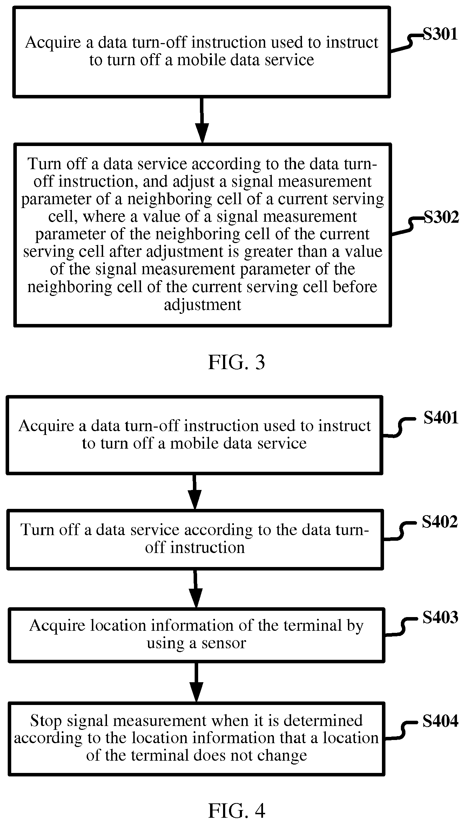

In an embodiment of the present invention, as shown in FIG. 3, FIG. 3 is a schematic flowchart of a method for adjusting a signal measurement threshold according to this embodiment of the present invention. The method is applied to a terminal that supports at least a 4G network, and in the terminal that supports at least 4G, a dual standby technology may be used, or a CSFB technology may be used, which is not limited in this embodiment of the present invention. The method includes:

S301: Acquire a data turn-off instruction used to instruct to turn off a mobile data service.

The data turn-off instruction may be a data turn-off instruction input by a user, or may be a data turn-off instruction triggered by an application program, which is not limited in this embodiment of the present invention.

The mobile data service is a general packet radio service in which a terminal is carried in an environment of a 2G or 3G or 4G network. For example, in this embodiment of the present invention, when user equipment is carried in an environment of a 4G network, an end-to-end, wide-area wireless IP connection may be established between the user equipment and a server by using a PS technology.

S302: Turn off a data service according to the data turn-off instruction, and adjust a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment.

Refer to the descriptions of the foregoing embodiments. The UE determines, by using an Srx criterion, a signal measurement initiation condition of a neighboring cell. Formulas of calculating Srxlev and Squal are separately:

$$\text{Srxlev} = Q_{\text{rxlevmeas}} - (Q_{\text{rxlevmin}} + Q_{\text{rxlevminoffset}}) - \text{Pcompensation} \quad (1)$$

$$\text{Squal} = Q_{\text{qualmeas}} - (Q_{\text{qualmin}} + Q_{\text{qualminoffset}}) \quad (2)$$

In the existing standard protocols, a standard meeting that the UE does not perform signal measurement on an intra-frequency neighboring cell is defined to be that Srxlev > $S_{IntraSearchP}$ and Squal > $S_{IntraSearchQ}$ are both met, where $S_{IntraSearchP}$ is a power threshold value for the UE to perform signal measurement on an intra-frequency neighboring cell, and $S_{IntraSearchQ}$ is a quality threshold value for the UE to perform signal measurement on an intra-frequency neighboring cell. In the existing protocols, a standard meeting that the UE does not perform signal measurement on an inter-frequency neighboring cell is defined to be that Srxlev > $S_{nonIntraSearchP}$ and Squal > $S_{nonIntraSearchQ}$ are both met, where $S_{nonIntraSearchP}$ is a power threshold value for the UE to perform signal measurement on an inter-frequency neighboring cell, and $S_{nonIntraSearchQ}$ is a quality threshold value for the UE to perform signal measurement on an inter-frequency neighboring cell. In the foregoing embodiments, a signal measurement threshold value of a neighboring cell of a current serving cell is adjusted, that is, parameters on the right side of the foregoing inequalities are adjusted. In this embodiment of the present invention, a measurement parameter of the neighboring cell of the current serving cell may be adjusted. Optionally, the signal measurement parameter includes a selection receive level (Srxlev) value. Optionally, the signal measurement parameter includes a selection receive level (Srxlev) value and a selection quality (Squal) value. That is, parameters on the left side of the foregoing inequalities are adjusted. It should be understood that in an additional implementation manner of this embodiment of the present invention, it may be included that a terminal or a wireless communications device adjusts parameters on both sides of each inequality, so that the foregoing inequalities may be implemented more easily, and the terminal or the wireless communications device does not meet a condition of performing measurement on a neighboring cell of the current serving cell, thereby reducing a quantity of times of signal measurement on the neighboring cell, and achieving reduction of power consumption.

In this embodiment provided in the present invention, in an environment of a 4G network, user equipment turns off a mobile data service and adjusts a signal measurement parameter of a neighboring cell of a current serving cell, so that a value of a signal measurement parameter of the neighboring cell of the current serving cell after adjustment is greater than a value of the signal measurement parameter of the neighboring cell of the current serving cell before adjustment, thereby reducing a quantity of times of signal measurement that is performed on the neighboring cell by the user equipment within a preset period of time; therefore, power consumption is reduced, a standby time of a terminal is extended, and user experience is improved.

In an implementation manner of this embodiment of the present invention, the terminal may be a dual card dual standby terminal, and the dual card dual standby terminal includes a first smart card and a second smart card. For example, two smart cards are inserted in the dual card dual standby terminal. The acquiring a data turn-off instruction used to instruct to turn off a mobile data service may be specifically: acquiring a data turn-off instruction used to instruct to turn on a mobile data service of the first smart card and to turn off a mobile data service of the second smart card; and the turning off a mobile data service according to the data turn-off instruction and adjusting a signal measurement parameter of a neighboring cell of a current serving cell is specifically: turning on a mobile data service of the first smart card and turning off a mobile data service of the second smart card according to the data turn-off instruction, and adjusting the signal measurement parameter of the neighboring cell of the current serving cell. The smart card may be a SIM (Subscriber Identity Module, subscriber identity module) card, a UICC card (Universal Integrated Circuit Card, universal integrated circuit card), a mobile data card, or the like, and may provide the terminal with a function such as wireless network access. The turning on a mobile data service of the first smart card may be turning on a mobile data service between the terminal or a wireless communications device and a network to which the first smart card belongs. Specifically, two smart cards are connected to the terminal. When the first smart card turns on a mobile data service, the second smart card cannot turn on a mobile data service. When the terminal or the wireless communications device turns on a mobile data service of the first smart card, a mobile data service of the second smart card is turned off, and a signal measurement parameter of a neighboring cell of a current serving cell is adjusted. Optionally, the first smart card and the second smart card both camp on a 4G network cell. For example, the first smart card is a smart card of China Mobile and supports GSM/TDS-CDMA/TDD-LTE, and the second smart card is a smart card of China Telecom and supports CDMA/EVDO/FDD-LTE or CDMA/EVDO/TDD-LTE. In this case, after a mobile data service of China Mobile is turned on, a mobile data service of China Telecom is automatically turned off, and a signal measurement parameter of a neighboring cell of a current serving cell in EVDO/FDD-LTE or EVDO/TDD-LTE of China Telecom is adjusted, so that a value of a signal measurement parameter of the neighboring cell of the current serving cell after adjustment is greater than a value of the signal measurement parameter of the neighboring cell of the current serving cell before adjustment. In this implementation manner, after learning that the first smart card turns on the mobile data service, the terminal or the wireless communications device may turn off the mobile data service of the second smart card and adjust the signal measurement parameter of the neighboring cell of the current serving cell of the second smart card instead of activating a PS protocol stack of the second smart card. On the basis of effectively reducing power consumption, a user can be enabled to perceive that currently the mobile data service of the second smart card is already turned off, thereby improving user experience.

In an implementation manner of this embodiment of the present invention, the signal measurement parameter includes a selection receive level Srxlev value. For example, when a broadcast message sent by a base station does not include Quality related information, the UE may skip acquiring a related parameter of a quality value of a signal of the current serving cell. The adjusting a signal measurement parameter of a neighboring cell of a current serving cell includes: acquiring a power value of a reference signal of the current serving cell, a minimum signal power value required by the current serving cell, and a power offset value required by the current serving cell; acquiring a selection receive level (Srxlev) value of the current serving cell according to the power value of the reference signal of the current serving cell, the minimum signal power value required by the current serving cell, and the power offset value required by the current serving cell; and adjusting Srxlev, where Srxlev after adjustment is greater than Srxlev before adjustment. For example, after acquiring the foregoing parameters and acquiring, through calculation according to formula (1), Srxlev of a cell in which the UE is currently located, the UE may adjust the signal measurement parameter according to a preset rule, for example, a preset algorithm and according to Srxlev calculated by the UE, and perform addition and subtraction operations or multiplication and division operations on Srxlev, so that Srxlev after adjustment is greater than Srxlev before adjustment.

In an implementation manner of this embodiment of the present invention, the signal measurement parameter includes a selection receive level Srxlev value. For example, when a broadcast message sent by a base station does not include Quality related information, the UE may skip acquiring a related parameter of a quality value of a signal of the current serving cell. The adjusting a signal measurement parameter of a neighboring cell of a current serving cell includes: acquiring a power value of a reference signal of the current serving cell, a minimum signal power value required by the current serving cell, and a power offset value required by the current serving cell; and adjusting at least one of the power value of the reference signal of the current serving cell, the minimum signal power value required by the current serving cell, and the power offset value required by the current serving cell, so that a selection receive level value Srxlev acquired according to a power value of the reference signal of the current serving cell, a minimum signal power value required by the current serving cell, and a power offset value required by the current serving cell that are obtained after adjustment is greater than Srxlev acquired according to the power value of the reference signal of the current serving cell, the minimum signal power value required by the current serving cell, and the power offset value required by the current serving cell that are obtained before adjustment. According to the foregoing formula (1), a difference between this implementation manner of this embodiment of the present invention and the previous implementation manner of this embodiment of the present invention is that an object of adjustment in the previous implementation manner is the parameter on the left side of the equation of formula (1), and an object of adjustment in this implementation manner is a parameter on the right side of the equation of formula (1). Both the two implementation manners achieve that Srxlev after parameter adjustment is greater than Srxlev before parameter adjustment. It should be understood that, this embodiment of the present invention further includes a case in which the parameters on both sides of the equation of formula (1) are adjusted, and Srxlev after parameter adjustment is greater than Srxlev before parameter adjustment. Specifically, in the implementation manner of this embodiment of the present invention, the adjusting at least one of the power value of the reference signal of the current serving cell, the minimum signal power value required by the current serving cell, and the power offset value required by the current serving cell may include cases of adjusting only one parameter (for example, the minimum signal power value required by the current serving cell) thereof, adjusting any two parameters (for example, the minimum signal power value required by the current serving cell and the power offset value required by the current serving cell), and adjusting the three parameters.

In an implementation manner of this embodiment of the present invention, the signal measurement parameter includes a selection receive level Srxlev value and a selection quality Squal value, and the adjusting a signal measurement parameter of a neighboring cell of a current serving cell includes: acquiring a power value of a reference signal of the current serving cell, a minimum signal power value required by the current serving cell, and a power offset value required by the current serving cell; acquiring Srxlev according to the power value of the reference signal of the current serving cell, the minimum signal power value required by the current serving cell, and the power offset value required by the current serving cell; acquiring a quality value of the reference signal of the current serving cell, a minimum signal quality value required by the current serving cell, and a quality offset value required by the current serving cell; acquiring Squal of the current serving cell according to the quality value of the reference signal of the current serving cell, the minimum signal quality value required by the current serving cell, and the quality offset value required by the current serving cell; and adjusting Srxlev and Squal, where Srxlev after adjustment is greater than Srxlev before adjustment, and Squal after adjustment is greater than Squal before adjustment. It should be understood that a sequence of acquiring corresponding parameters is not limited in this implementation manner, that is, a parameter related to the quality value may be acquired first, or a parameter related to the power value may be acquired first, or a parameter related to the quality value and a parameter related to the power value may be acquired at the same time, which is not limited. After acquiring the foregoing parameters and acquiring, through calculation according to formula (1) and formula (2), Srxlev and Squal of a cell in which the UE is currently located, the UE may adjust the signal measurement parameter according to a preset rule, for example, a preset algorithm and according to Srxlev and Squal that are calculated by the UE, and perform either addition and subtraction operations or multiplication and division operations on Srxlev and Squal, so that Srxlev after adjustment is greater than Srxlev before adjustment, and Squal after adjustment is greater than Squal before adjustment.

In an implementation manner of this embodiment of the present invention, the signal measurement parameter includes a selection receive level Srxlev value and a selection quality Squal value, and the adjusting a signal measurement parameter of a neighboring cell of a current serving cell includes: acquiring a power value of a reference signal of the current serving cell, a minimum signal power value required by the current serving cell, and a power offset value required by the current serving cell; acquiring a quality value of the reference signal of the current serving cell, a minimum signal quality value required by the current serving cell, and a quality offset value required by the current serving cell; adjusting at least one of the power value of the reference signal of the current serving cell, the minimum signal power value required by the current serving cell, and the power offset value required by the current serving cell, so that a selection receive level value Srxlev acquired according to a power value of the reference signal of the current serving cell, a minimum signal power value required by the current serving cell, and a power offset value required by the current serving cell that are obtained after adjustment is greater than Srxlev acquired according to the power value of the reference signal of the current serving cell, the minimum signal power value required by the current serving cell, and the power offset value required by the current serving cell that are obtained before adjustment; and adjusting at least one of the quality value of the reference signal of the current serving cell, the minimum signal quality value required by the current serving cell, and the quality offset value required by the current serving cell, so that a selection quality Squal value acquired according to a quality value of the reference signal of the current serving cell, a minimum signal quality value required by the current serving cell, and a quality offset value required by the current serving cell that are obtained after adjustment is greater than Squal acquired according to the quality value of the reference signal of the current serving cell, the minimum signal quality value required by the current serving cell, and the quality offset value required by the current serving cell that are obtained before adjustment. It should be understood that a sequence of acquiring corresponding parameters is not limited in this implementation manner, that is, a parameter related to the quality value may be acquired first, or a parameter related to the power value may be acquired first, or a parameter related to the quality value and a parameter related to the power value may be acquired at the same time, which is not limited. According to the foregoing formulas (1) and (2), a difference between this implementation manner of this embodiment of the present invention and the previous implementation manner of this embodiment of the present invention is that the object of adjustment in the previous implementation manner is parameters on the left side of the equations of formulas (1) and (2), and an object of adjustment in this implementation manner is parameters on the right side of the equations of formulas (1) and (2). Both the two implementation manners implement that Srxlev after parameter adjustment is greater than Srxlev before parameter adjustment. It should be understood that, this embodiment of the present invention further includes a case in which parameters on both sides of the equations of formulas (1) and (2) are adjusted, Srxlev after related parameter adjustment is greater than Srxlev before parameter adjustment, and Squal after related parameter adjustment is greater than Squal before parameter adjustment. Specifically, in the implementation manner of this embodiment of the present invention, the adjusting at least one of the power value of the reference signal of the current serving cell, the minimum signal power value required by the current serving cell, and the power offset value required by the current serving cell may include cases of adjusting only one parameter (for example, the minimum signal power value required by the current serving cell) thereof, adjusting any two parameters (for example, the minimum signal power value required by the current serving cell and the power offset value required by the current serving cell), and adjusting the three parameters. The adjusting at least one of the quality value of the reference signal of the current serving cell, the minimum signal quality value required by the current serving cell, and the quality offset value required by the current serving cell may include cases of adjusting only one parameter (for example, the minimum signal quality value required by the current serving cell) thereof, adjusting any two parameters (for example, the minimum signal quality value required by the current serving cell and the quality offset value required by the current serving cell), and adjusting the three parameters.

In the foregoing implementation manners of this embodiment of the present invention, a specific adjustment manner is not limited. Optionally, the UE may preset a maximum range adjustment value in which the UE allows to adjust a signal measurement parameter, and determine an adjustment manner according to the maximum range adjustment value. For example, when adjusting a current signal measurement threshold value of the UE, the UE may preset a maximum adjustment value of the current signal measurement threshold value, and the UE may adjust once the signal measurement threshold value to the maximum adjustment value preset by the UE. Optionally, the UE may also perform adjustment gradually one time after another. For example, when adjusting the current signal measurement threshold value of the UE, the UE may adjust the signal measurement threshold value within a first preset time according to a preset rule and according to a first preset adjustment value, to generate a first signal measurement adjustment threshold value, and the UE determines, according to the first signal measurement adjustment threshold value, whether signal measurement needs to be performed. Within a second preset time, the UE may adjust the first signal measurement adjustment threshold value according to a preset rule and according to a second preset adjustment value, to generate a second signal measurement adjustment threshold value, and the UE determines, according to the second signal measurement adjustment threshold value, whether signal measurement needs to be performed. The second preset time may be longer than the first preset time, which is not limited in this embodiment of the present invention.

In the foregoing implementation manners of this embodiment of the present invention, after the UE adjusts a signal measurement parameter of a neighboring cell of a current serving cell, and before the signal measurement parameter of the neighboring cell of the current serving cell before adjustment is restored, the UE determines signal measurement on the neighboring cell according to the signal measurement parameter of the neighboring cell of the current serving cell after adjustment.

In the foregoing implementation manners of this embodiment of the present invention, the method further includes: acquiring a data turn-on instruction used to instruct to turn on the mobile data service; and turning on the mobile data service according to the data turn-on instruction, and adjusting a value of a signal measurement parameter of the neighboring cell of the current serving cell to a value of the signal measurement parameter of the neighboring cell of the current serving cell before adjustment. In the foregoing implementation manners of this embodiment of the present invention, after the UE adjusts the value of the signal measurement parameter of the neighboring cell of the current serving cell, and before the signal measurement threshold value of the neighboring cell before adjustment is restored, the UE performs signal measurement according to the value of the signal measurement parameter of the neighboring cell of the current serving cell after adjustment. After turning on a mobile data service, the user equipment adjusts a signal measurement cycle of the current serving cell to the value of the signal measurement parameter of the neighboring cell of the current serving cell before adjustment, and performs signal measurement according to the value of the signal measurement parameter of the neighboring cell of the current serving cell before adjustment.

In an embodiment of the present invention, as shown in FIG. 4, FIG. 4 is a schematic flowchart of a signal measurement method according to this embodiment of the present invention. The method is applied to a terminal that supports at least a 4G network, and in the terminal that supports at least 4G, a dual standby technology may be used, or a CSFB technology may be used, which is not limited in this embodiment of the present invention. The method includes:

S401: Acquire a data turn-off instruction used to instruct to turn off a mobile data service.

The data turn-off instruction may be a data turn-off instruction input by a user, or may be a data turn-off instruction triggered by an application program, which is not limited in this embodiment of the present invention. The mobile data service is a general packet radio service in which a terminal is carried in an environment of a 2G or 3G or 4G network. For example, in this embodiment of the present invention, when user equipment is carried in an environment of a 4G network, an end-to-end, wide-area wireless IP connection may be established between the user equipment and a server by using a PS technology.

S402: Turn off a mobile data service according to the data turn-off instruction.

S403: Acquire location information of the terminal by using a sensor.

Optionally, the terminal may detect the location information of the terminal by using a direction sensor or a gyro sensor. The direction sensor or the gyro sensor detects displacements of the UE in three directions X, Y, and Z in three-dimensional space to detect a motion displacement of the terminal, where the directions X and Y are used to determine directions in a horizontal plane, and the direction Z is used to determine a direction perpendicular to the horizontal plane. Displacement data detected by the sensor may be used as basic analysis data for changes of the location information of the terminal, and is further used to provide a data support for whether the terminal needs to perform signal measurement. For example, the direction sensor may acquire a displacement in at least any one direction of the three directions X, Y, and Z, and when the terminal determines, by using the sensor, that a time of a continuous location change in any direction meets a preset time threshold, perform signal measurement; when the terminal detects, by using the sensor, no location change in any direction, or a time of a continuous location change in any direction is less than a preset time threshold, the terminal or a wireless communications device may stop signal measurement.

Optionally, the terminal may include a gravity sensing module (may also be referred to as a gravity sensor), and implements determining of moving location information of the terminal by using a piezoelectric effect. Specifically, the gravity sensing module may include a gravity block and a piezoelectric crystal. When a location of the terminal changes, a pointing direction of the terminal is different, a direction of the gravity block changes because of gravity, a force applied by the gravity block on the piezoelectric crystal in a different direction is different, the piezoelectric crystal receives a change of resistance and outputs a different voltage signal, and the terminal determines a direction of the change of the location according to the voltage signal. When the terminal determines, by using the gravity sensor, that the terminal is in a moving state, the terminal may detect a time when a displacement occurs. When it is determined that the terminal does not displace, or a moving time of the terminal is less than a preset time threshold, the terminal or a wireless communications device may stop signal measurement.

Optionally, the terminal may include an acceleration sensor. The acceleration sensor is configured to perform signal measurement on a change of an acceleration when the location of the terminal changes. Specifically, when an initial acceleration of the terminal is 0, the acceleration sensor detects a change of an acceleration of the terminal in real time, and the terminal enables a data detection function of the acceleration sensor. When the acceleration sensor senses that the acceleration of the terminal changes, and the change of the speed of the terminal is transferred by using a signal, the terminal may filter, by using a low pass filter (low pass filter), a signal received from the acceleration sensor. The low pass filter is configured to eliminate noise caused by a slight movement of a non-terminal user, for example, noise caused by shaking a mobile phone hard by the user. A processor of the terminal performs two times of integration operations on three numerical values (x, y, z) sent by the acceleration sensor, and converts the acceleration into a moving speed of the terminal. When the terminal acquires the moving speed of the terminal according to data transmitted by the sensor and determines that the terminal is in a moving state, the terminal may detect a time when a displacement occurs. When it is determined that a location of the terminal does not change, or the time of the location change of the terminal is less than a preset time threshold, the terminal or the wireless communications device may stop signal measurement.

The terminal may set a current state of the terminal as an initial state, record initial state value information detected by the sensor in the terminal at this time, record the initial state value information in an initial data structure by using a specific data structure, and label the initial state value information as initial state information of the terminal. The terminal uses the initial state information as a reference and calculates a subsequent moving state of the terminal. The terminal turns on the sensor to perform data detection, and receives data of the sensor in real time. The terminal may analyze the data of the sensor according to a preset algorithm, acquire the location information of the terminal, and acquire time information corresponding to the location information of the terminal.

The terminal may further include a location sensor, a gyroscope, an atmospheric pressure sensor, a temperature sensor, and the like. The terminal may determine, by using a single sensor, whether a current quantity of times of signal measurement needs to be reduced, or may determine, by using multiple sensors, in a comprehensive manner, whether signal measurement needs to be stopped.

S404: Stop signal measurement when it is determined according to the location information that a location of the terminal does not change.

In this embodiment of the present invention, in the signal measurement, a network side sends a reference signal to the terminal or the mobile communications device, and the terminal or the mobile communications device measures strength of the reference signal. Specifically, power of the reference signal may be measured, or power and quality of the reference signal may be measured. The stopping signal measurement is that signal measurement is not performed.

The location information of the terminal may be obtained by parsing the data of the sensor. If it is determined according to the location information that the location of the terminal does not change, the terminal or the wireless communications device may stop signal measurement. It should be understood that, in this embodiment of the present invention, the determining, according to the location information, that the location of the terminal does not change may include, but is not limited to, the following cases: In a first case, it is determined according to the location information that the terminal stays in a static state all the time. For example, a mobile phone is placed on the top of a desk all the time, and a user does not perform any operation on the mobile phone. Optionally, the determining that the terminal is in a static state may be that a location of the terminal does not change within a preset period of time. In a second case, it is determined according to the location information that a location of the terminal changes. However, duration in which the location continuously changes is shorter than a preset time, and in this case, it may be considered that the location of the terminal does not change. For example, a mobile phone is placed on the top of the desk, and the user picks up the mobile phone to check the time. In this case, the location of the terminal changes from the top of the desk to the hand of the user, and a spatial location changes. However, duration in which a location continuously changes is shorter than a preset time. For example, the user sits in a chair, picks up a mobile phone to check the time, and then plays a game, or the user picks up the mobile phone from the top of the desk, checks the time, and then places the mobile phone back to an original location. Because the location of the mobile phone does not change continuously within the preset time, it may be considered that the location of the terminal does not change. In a third case, it is determined according to the location information that a location of the terminal changes, but an extent to which the location changes is less than a preset threshold. For example, the mobile phone is placed on the top of the desk, and the user picks up the mobile phone to check the time. In this case, the location of the terminal changes from the desktop to the hand of the user, and an extent to which the location changes is relatively small; therefore, it may be considered that the location of the terminal does not change.

The terminal or the wireless communications device acquires a data turn-off instruction and acquires location information, and a sequence relationship of the two acquiring steps is not limited in this embodiment of the present invention. That is, the data turn-off instruction may be acquired first, and the location information of the terminal is then acquired; the location information of the terminal may be acquired first, and the data turn-off instruction is then acquired; the location information of the terminal may be acquired at the same time when the data turn-off instruction is acquired, which is not limited in this embodiment of the present invention.

In this embodiment provided in the present invention, in an environment of a 4G network, a mobile data service is turned off, location information of a terminal is acquired, and when it is determined according to the location information that a location of the terminal does not change, signal measurement is stopped, thereby reducing power consumption, extending a standby time of the terminal, and improving user experience.

In an implementation manner of this embodiment of the present invention, after it is determined according to the location information that the location of the user equipment does not change and signal measurement is stopped, the method further includes: acquiring location information of the terminal by using the sensor; and when it is determined according to the location information that the location of the terminal keeps changing within a preset time, starting signal measurement. That is, the location information of the terminal keeps changing, for example, it is learned according to the sensor that a location of the terminal keeps changing and a time when the location is changing is greater than or equal to a preset threshold, for example, exceeds half a minute; in this case, the terminal or the wireless communications device starts signal measurement. After signal measurement is started, the related parameter of signal measurement may be adjusted with reference to the related parameter before signal measurement is stopped.

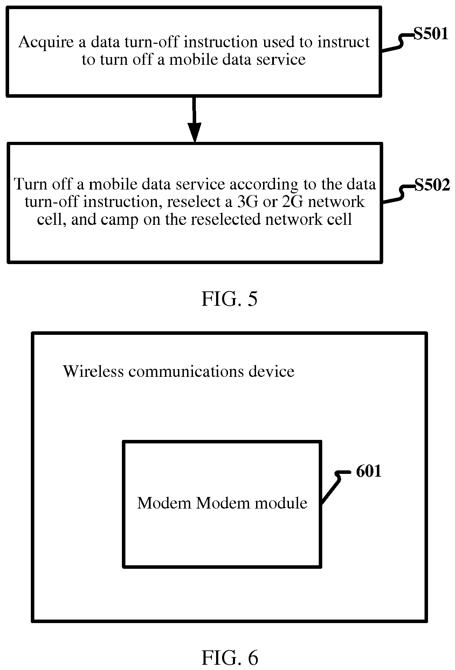

In an embodiment of the present invention, as shown in FIG. 5, FIG. 5 is a schematic flowchart of a network handover method according to this embodiment of the present invention. The method may be applied to a dual card dual standby terminal that supports at least 4G and a circuit domain fallback CSFB terminal that supports at least 4G. In the CSFB terminal that supports at least 4G, a CSFB technology may be used. In a solution of the CSFB technology, a multi-mode single standby terminal preferentially camps on an LTE network to acquire a high rate data service of a PS domain, and when a voice service is needed, returns to a 2G/3G network to initiate a CS domain voice call; after the voice service is completed, the terminal camps on the LTE network again. After an LTE data service is turned off, the CSFB terminal still camps on an environment of the LTE network and works according to a normal idle mode. When a user needs to perform a voice call, a relatively long operation delay is required for the CSFB terminal to fall back from the LTE network to the 2G/3G network, causing low manipulation efficiency and poor user experience. Therefore, as shown in FIG. 5, the flowchart of the network handover method is provided in this embodiment of the present invention, and the method includes:

S501: Acquire a data turn-off instruction used to instruct to turn off a mobile data service.

Optionally, the data turn-off instruction may be a data turn-off instruction input by a user; optionally, the data turn-off instruction may also be an input turn-off instruction triggered by an application program, which is not limited in this embodiment of the present invention. Specifically, a CSFB terminal camps on a 4G network, and may turn on a mobile data service in an environment of the 4G network. A dual card dual standby terminal includes a first smart card and a second smart card, and may turn on a mobile data service in the environment of the 4G network by using any smart card. After the dual card dual standby terminal acquires the data turn-off instruction, the dual card dual standby terminal may turn off a packet switched PS domain and turn off a mobile data service according to the data turn-off instruction.

S502: Turn off a mobile data service according to the data turn-off instruction, reselect a 3G or 2G network cell, and camp on the reselected network cell.

After acquiring the data turn-off instruction, after turning off a mobile data service camping on 4G, the terminal or the wireless communications device terminates data transmission with a server, reselects the 3G or 2G network cell from a 4G network cell, reads cell information on a 3G or 2G BCCH channel, performs a location update, and camps on the reselected network cell. That is, if the terminal or the wireless communications device reselects the 3G network cell from the 4G network cell, the terminal or the wireless communications device subsequently camps on the reselected 3G network cell; or if the terminal or the wireless communications device reselects the 2G network cell from the 4G network cell, the terminal or the wireless communications device subsequently camps on the reselected 2G network cell.

In this embodiment of the present invention, CSFB user equipment reselects a 2G/3G network, and may directly perform a voice call service in an environment of the 2G/3G network on which the CSFB user equipment camps, so that a delay of performing a voice call by the user equipment is shortened, thereby improving user experience.

In an implementation manner of this embodiment of the present invention, the network handover method is applied to a terminal that supports at least 4G, and the terminal includes a first smart card and a second smart card. The acquiring a data turn-off instruction used to instruct to turn off a mobile data service includes: acquiring a data turn-off instruction used to instruct to turn on a mobile data service of the first smart card and to turn off a mobile data service of the second smart card. The turning off a mobile data service according to the data turn-off instruction, and reselecting a 3G or 2G network cell includes: turning on a mobile data service of the first smart card and turning off a mobile data service of the second smart card according to the data turn-off instruction, and reselecting the 3G or 2G network cell for the second smart card. It should be understood that, the acquiring a data turn-off instruction used to instruct to turn on a mobile data service of the first smart card and to turn off a mobile data service of the second smart card may be understood as that the terminal acquires two instructions, that is, an instruction to turn on a mobile data service of the first smart card and an instruction to turn off a mobile data service of the second smart card; or may be understood as that the terminal acquires only one instruction, for example, an instruction to turn on a mobile data service of the first smart card, and after acquiring the instruction, the terminal generates by default, according to the instruction, an instruction to turn off a mobile data service of the second smart card. In an actual operation process of a user, the acquiring a data turn-off instruction used to instruct to turn on a mobile data service of the first smart card and to turn off a mobile data service of the second smart card may include at least two cases as follows, that is, acquiring an instruction of switching a mobile data service from the second smart card to the first smart card; and acquiring an instruction of switching a default data account from the second smart card to the first smart card. Optionally, in this implementation manner, the turning on a mobile data service of the first smart card includes: sending a first attach request to a mobile network in which the first smart card is located, where the first attach request is used to request the first smart card to be attached to the mobile network in which the smart card is located, and turning on a mobile data service in an environment of the mobile network. The turning off a mobile data service of the second smart card includes: sending a detach request to a 4G mobile network in which the second smart card is located, where the detach request is used to request the second smart card not to be attached to the 4G mobile network in which the smart card is located, and turning off a mobile data service in an environment of the 4G mobile network. The reselecting the 3G or 2G network cell for the second smart card includes: sending a second attach request to the 3G or 2G network reselected for the second smart card, where the second detach request is used to request the second smart card to be attached to the 3G or 2G network reselected for the smart card.

In an implementation manner of this embodiment of the present invention, when the terminal includes a first smart card and a second smart card, the method further includes: presenting, by the terminal, user prompt information, where the user prompt information is used to inform a user that the second smart card turns off a mobile data service and the first smart card turns on a mobile data service. Optionally, the user prompt information may be specifically used to prompt network states of the first smart card and the second smart card. A time point of presenting the prompt information is not limited in this embodiment of the present invention, where the time of presenting the prompt information may be before the first smart card and the second smart card switch a mobile data service, or may be after the first smart card and the second smart card switch a mobile data service. For example, after the first smart card and the second smart card switch a mobile data service, the terminal may present user prompt information: "The data service is switched to the first smart card, and the second smart card provides only a voice type service and an information-type service", to make it convenient for the user to perform an operation.

After the turning off a data service in this embodiment of the present invention, the method further includes: presenting user prompt information, where the user prompt information is used to inform a user whether it is necessary to reselect the 3G or 2G network cell, and camping on the reselected network cell; and acquiring a reselection and camping instruction that is input according to the user prompt information by the user, and reselecting the 3G or 2G network cell and camping on the reselected cell according to the reselection and camping instruction. For example, after turning off a data service, the terminal may provides the user with one prompt in a form of a dialog box, for example, "Do you want to have better voice experience", and the prompt is in fact to inform the user whether it is necessary to reselect the 3G or 2G network cell. If the user selects YES, the terminal performs cell reselection, and camps on the reselected network cell.

In the foregoing implementation manners of this embodiment of the present invention, the reselecting a 3G or 2G network cell, and camping on the reselected network cell may include: reselecting, by the terminal or the wireless communications device, the 3G network cell and camping on the 3G network cell; when it is failed to reselect the 3G network cell, reselecting the 2G network cell, and camping on the 2G network cell. That is, the CSFB user equipment may most preferentially access a 3G cell; and when the CSFB user equipment cannot access the 3G cell, the CSFB user equipment second-most preferentially selects a 2G network cell.

In the foregoing implementation manners of this embodiment of the present invention, the method further includes: recording frequency information of a connected Long Term Evolution LTE network, where the frequency information includes at least one of carrier frequency information and frequency band information; turning on a Long Term Evolution LTE network data service; and acquiring the frequency information, and accessing the Long Term Evolution LTE network corresponding to the frequency information.

Optionally, the terminal or the wireless communications device may turn off a data service, and then perform the step of recording frequency information of a connected Long Term Evolution LTE network.

Specifically, the carrier frequency information may be a specific carrier frequency on which the terminal camps before the terminal reselects the 3G or 2G network cell; the frequency band information may be band frequency band information on which the terminal historically camps, for example, frequency information, which is recorded in the terminal, of LTE that the terminal historically accesses. After a data service is turned on, a CSFB terminal accesses an LTE network. The terminal invokes stored frequency information of LTE and accesses an LTE network corresponding to the frequency information. For example, when the frequency information of LTE stored in the terminal is carrier frequency information, for example, the carrier frequency is 105, the terminal accesses an LTE network corresponding to the carrier frequency information; when the frequency information of LTE of stored in the terminal is frequency band information, for example, an interval of a carrier frequency of the frequency band is 900 Hz to 950 Hz, the terminal accesses an LTE network corresponding to the frequency band information. Therefore, a time used by the terminal to perform a search for an LTE network is saved, a delay of acquiring an LTE data service is shortened, and user experience is improved.

Optionally, the frequency information recorded in the terminal includes carrier frequency information and frequency band information. After turning on an LTE data service, the terminal acquires carrier frequency information, which is recorded in the terminal, of LTE, and accesses an LTE network corresponding to the carrier frequency information. When the terminal may access the LTE network corresponding to the carrier frequency information, the terminal accesses the LTE network corresponding to the carrier frequency information. When the terminal cannot access the LTE network corresponding to the carrier frequency information, the terminal acquires the frequency band information of the LTE and accesses the LTE network corresponding to the frequency band information. The frequency band information may be information about a frequency band to which a carrier frequency on which the terminal currently camps belongs, or may be information about the frequency band to which a carrier frequency on which the terminal used to camp belongs. The terminal preferentially accesses a network corresponding to the frequency band to which the carrier frequency on which the terminal currently camps belongs; and when the terminal cannot access the network corresponding to the frequency band to which the carrier frequency on which the terminal currently camps belongs, the terminal accesses a network corresponding to a frequency band on which the terminal used to camp.

In an embodiment of the present invention, an embodiment of a wireless communications device is further provided. The wireless communications device may be a chip. The wireless communications device may be used to perform steps of the method shown in FIG. 1, and for details of the steps of the method, reference may be made to the method embodiment. As shown in FIG. 6, the wireless communications device includes a modem Modem module 601, where the Modem module 601 is configured to acquire a data turn-off instruction, where the data turn-off instruction is used to instruct to turn off a mobile data service; and turn off a mobile data service according to the data turn-off instruction, and adjust a signal measurement cycle of a current serving cell, where a length of a signal measurement cycle after adjustment is greater than a length of the signal measurement cycle before adjustment.

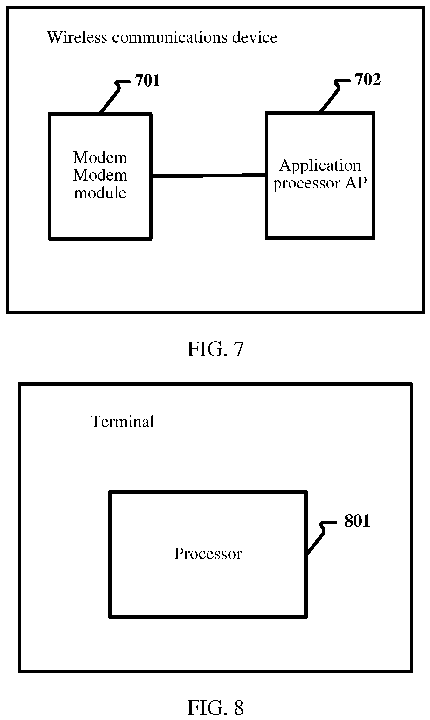

Optionally, the Modem module may directly acquire a data turn-off instruction input by a user or input by an application program, or may acquire a data turn-off instruction from another apparatus of the wireless communications device. For example, as shown in FIG. 7, the wireless communications device further includes an application processor AP 702, where the AP 702 is configured to acquire a data turn-off instruction, where the data turn-off instruction is used to instruct to turn off a mobile data service; a Modem module 701 is configured to acquire the data turn-off instruction from the AP 702 after the AP 702 acquires the data turn-off instruction, turn off a mobile data service according to the data turn-off instruction, and adjust a signal measurement cycle of a current serving cell.

In an implementation manner of this embodiment of the present invention, the Modem module is further configured to acquire a data turn-on instruction used to instruct to turn on the mobile data service; and turn on the mobile data service according to the data turn-on instruction, and adjust the signal measurement cycle of the current serving cell to the signal measurement cycle before adjustment.

In an implementation manner of this embodiment of the present invention, the wireless communications device is applied to a dual card dual standby terminal, the dual card dual standby terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement cycle of a current serving cell corresponding to the second smart card.

In the foregoing implementation manners of this embodiment of the present invention, the signal measurement cycle of the current serving cell may be a discontinuous reception DRX cycle.

In an embodiment of the present invention, an embodiment of a wireless communications device is further provided. The wireless communications device may be a chip. The wireless communications device may be used to perform steps of the method shown in FIG. 2, and for details of the steps of the method, reference may be made to the method embodiment. As shown in FIG. 6, the wireless communications device includes a modem Modem module 601, where the Modem module 601 is configured to acquire a data turn-off instruction used to instruct to turn off a mobile data service; and turn off a mobile data service according to the data turn-off instruction, and adjust a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment.

Optionally, the Modem module may directly acquire a data turn-off instruction input by a user or input by an application program, or may acquire a data turn-off instruction from another apparatus of the wireless communications device. For example, as shown in FIG. 7, the wireless communications device further includes an application processor AP 702, where the AP 702 is configured to acquire a data turn-off instruction, where the data turn-off instruction is used to instruct to turn off a mobile data service; and the Modem module 701 is configured to acquire the data turn-off instruction from the AP 701 after the AP 702 acquires the data turn-off instruction, turn off a mobile data service according to the data turn-off instruction, and adjust a signal measurement threshold value of a neighboring cell of a current serving cell.

In an implementation manner of this embodiment of the present invention, the wireless communications device is applied to a dual card dual standby terminal, the dual card dual standby terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement threshold value of a current serving cell corresponding to the second smart card.

In an implementation manner of this embodiment of the present invention, the Modem module adjusts the signal measurement threshold value of the neighboring cell of the current serving cell after adjustment to be less than the signal measurement value of the neighboring cell of the current serving cell before adjustment by 2 decibels (dB) or 3 dB.

In the foregoing implementation manners of this embodiment of the present invention, the Modem module is further configured to:

acquire a data turn-on instruction used to instruct to turn on the mobile data service; and

turn on the mobile data service according to the data turn-on instruction, and adjust the signal measurement threshold value of the neighboring cell of the current serving cell to the signal measurement threshold value of the neighboring cell of the current serving cell before adjustment.

In an embodiment of the present invention, an embodiment of a wireless communications device is further provided. The wireless communications device may be a chip. The wireless communications device may be used to perform steps of the method shown in FIG. 3, and for details of the steps of the method, reference may be made to the method embodiment. As shown in FIG. 6, the wireless communications device includes a modem Modem module 601, where the Modem module 601 is configured to acquire a data turn-off instruction used to instruct to turn off a mobile data service; and turn off a mobile data service according to the data turn-off instruction, and adjust a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment.

Optionally, the Modem module may directly acquire a data turn-off instruction input by a user or input by an application program, or may acquire a data turn-off instruction from another apparatus of the wireless communications device. For example, as shown in FIG. 7, the wireless communications device further includes an application processor AP 702, where the AP 702 is configured to acquire a data turn-off instruction, where the data turn-off instruction is used to instruct to turn off a mobile data service; and the Modem module 701 is configured to acquire the data turn-off instruction from the AP 702 after the AP 702 acquires the data turn-off instruction, turn off a mobile data service according to the data turn-off instruction, and adjust a signal measurement parameter of a neighboring cell of a current serving cell.

In an implementation manner of this embodiment of the present invention, the wireless communications device is applied to a dual card dual standby terminal, the dual card dual standby terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement parameter of a neighboring cell of a current serving cell corresponding to the second smart card.

In an implementation manner of this embodiment of the present invention, the signal measurement parameter includes a selection receive level Srxlev value, and that the Modem module adjusts the signal measurement parameter of the neighboring cell of the current serving cell includes: acquiring a power value of a reference signal of the current serving cell, a minimum signal power value required by the current serving cell, and a power offset value required by the current serving cell; acquiring a selection receive level Srxlev value of the current serving cell according to the power value of the reference signal of the current serving cell, the minimum signal power value required by the current serving cell, and the power offset value required by the current serving cell; and adjusting the Srxlev value, where an Srxlev value after adjustment is greater than the Srxlev value before adjustment; or acquiring a power value of a reference signal of the current serving cell, a minimum signal power value required by the current serving cell, a power offset value required by the current serving cell; and adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

In an implementation manner of this embodiment of the present invention, the signal measurement parameter includes a selection receive level Srxlev value and a selection quality Squal value, and that the Modem module adjusts the signal measurement parameter of the neighboring cell of the current serving cell includes: acquiring a power value of a reference signal of the current serving cell, a minimum signal power value required by the current serving cell, and a power offset value required by the current serving cell; acquiring an Srxlev value according to the power value of the reference signal of the current serving cell, the minimum signal power value required by the current serving cell, and the power offset value required by the current serving cell; acquiring a quality value of the reference signal of the current serving cell, a minimum signal quality value required by the current serving cell, and a quality offset value required by the current serving cell; acquiring a Squal value of the current serving cell according to the quality value of the reference signal of the current serving cell, the minimum signal quality value required by the current serving cell, and the quality offset value required by the current serving cell; and adjusting the Srxlev value and the Squal value, where an Srxlev value after adjustment is greater than the Srxlev value before adjustment, and a Squal value after adjustment is greater than the Squal value before adjustment; or acquiring a power value of a reference signal of the current serving cell, a minimum signal power value required by the current serving cell, and a power offset value required by the current serving cell; acquiring a quality value of the reference signal of the current serving cell, a minimum signal quality value required by the current serving cell, and a quality offset value required by the current serving cell; adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

In the foregoing implementation manners of this embodiment of the present invention, the Modem module is further configured to acquire a data turn-on instruction used to instruct to turn on the mobile data service; and turn on the mobile data service according to the data turn-on instruction, and adjust the value of the signal measurement parameter of the neighboring cell of the current serving cell to the value of the signal measurement parameter of the neighboring cell of the current serving cell before adjustment.

In an embodiment of the present invention, an embodiment of a wireless communications device is further provided. The wireless communications device may be a chip. The wireless communications device may be used to perform steps of the method shown in FIG. 4, and for details of the steps of the method, reference may be made to the method embodiment. As shown in FIG. 7, the wireless communications device includes a modem Modem module 701 and an application processor AP 702, where the Modem module 701 is connected to the AP 702. The Modem module 701 is configured to acquire a data turn-off instruction used to instruct to turn off a mobile data service; and turn off a mobile data service according to the data turn-off instruction; and the AP 702 is configured to acquire, by using a sensor, location information of a terminal including the wireless communications device; and when it is determined according to the location information that a location of the terminal does not change, send a signal measurement stop indication to the Modem module; the Modem 701 module is further configured to stop signal measurement according to the signal measurement stop indication sent by the AP.

In an implementation manner of this embodiment of the present invention, the AP is further configured to: after the Modem module stops signal measurement, acquire location information of the terminal by using the sensor; and when it is determined according to the location information that the location of the terminal keeps changing within a preset time, send a signal measurement start indication to the Modem module; the Modem module is further configured to start signal measurement according to the signal measurement start indication sent by the AP.

In an embodiment of the present invention, an embodiment of a wireless communications device is further provided. The wireless communications device may be a chip. The wireless communications device is applied to a circuit domain fallback CSFB terminal that supports at least 4G; or the wireless communications device is applied to a dual card dual standby terminal that supports at least 4G. The wireless communications device may be used to perform steps of the method shown in FIG. 5, and for details of the steps of the method, reference may be made to the method embodiment. As shown in FIG. 6, the wireless communications device includes a modem Modem module 601, and the Modem module 601 is configured to acquire a data turn-off instruction used to instruct to turn off a mobile data service; and turn off a mobile data service according to the data turn-off instruction, reselect a 3G or 2G network cell, and camp on the reselected network cell.

Optionally, the Modem module may directly acquire a data turn-off instruction input by a user or input by an application program, or may acquire a data turn-off instruction from another apparatus of the wireless communications device. For example, when the wireless communications device further includes an application processor AP, the AP is configured to acquire a data turn-off instruction, where the data turn-off instruction is used to instruct to turn off a mobile data service; the Modem module is configured to acquire the data turn-off instruction from the AP after the AP acquires the data turn-off instruction, and turn off a mobile data service according to the data turn-off instruction.

In an implementation manner of this embodiment of the present invention, the wireless communications device is applied to a terminal that supports at least 4G, the terminal includes a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and reselect the 3G or 2G network cell for the second smart card.

In an implementation manner of this embodiment of the present invention, the wireless communications device further includes an application processor AP, where the AP is connected to the Modem module, and the AP is configured to generate a first attach request; the AP is further configured to generate a detach request; the AP is further configured to generate a second attach request; and the terminal further includes a transmitter, where the transmitter is configured to send the first attach request to a mobile network in which the first smart card is located; the transmitter is further configured to send the detach request to a 4G mobile network in which the second smart card is located; and the transmitter is further configured to send the second attach request to the 3G or 2G network reselected for the second smart card.

In an implementation manner of this embodiment of the present invention, the wireless communications device further includes an application processor AP, where the AP is connected to the Modem module, and the AP is configured to generate user prompt information, where the user prompt information is used to inform a user that the second smart card turns off a mobile data service and the first smart card turns on a mobile data service

In an implementation manner of this embodiment of the present invention, the wireless communications device further includes an application processor AP, where the AP is connected to the Modem module, and the AP is configured to generate user prompt information, where the user prompt information is used to inform a user whether it is necessary to reselect the 3G or 2G network cell, and camp on the reselected network cell; the AP is further configured to acquire a reselection and camping instruction that is input according to the user prompt information by the user, where the reselection and camping instruction is used to instruct the wireless communications device to reselect the 3G or 2G network cell, and camp on the reselected network cell; the Modem module is configured to: after the AP acquires the reselection and camping instruction, reselect the 3G or 2G network cell and camp on the reselected cell according to the reselection and camping instruction.

In an implementation manner of this embodiment of the present invention, that the Modem module reselects the 3G or 2G network cell, and camps on the reselected network cell includes: the Modem module is configured to reselect the 3G network cell and camp on the 3G network cell; the Modem module is further configured to: when it is failed to reselect the 3G network cell, reselect the 2G network cell and camp on the 2G network cell.

In an implementation manner of this embodiment of the present invention, the wireless communications device further includes an application processor AP, where the AP is connected to the Modem module, and the AP is configured to: after the Modem module turns off a data service, and record frequency information of a connected Long Term Evolution LTE network, where the frequency information includes at least one of carrier frequency information and frequency band information; the Modem module is further configured to turn on a mobile data service; and acquire the frequency information, and access the LTE network corresponding to the frequency information.

In an embodiment of the present invention, an embodiment of a terminal is further provided. The terminal supports at least a 4G network. The terminal may be used to perform steps of the method shown in FIG. 1, and for details of the steps of the method, reference may be made to the method embodiment. As shown in FIG. 8, the terminal includes a processor 801, the processor 801 is configured to acquire a data turn-off instruction used to instruct to turn off a mobile data service; and turn off a mobile data service according to the data turn-off instruction, and adjust a signal measurement cycle of a current serving cell, where a length of a signal measurement cycle after adjustment is greater than a length of the signal measurement cycle before adjustment.

In an implementation manner of this embodiment of the present invention, the processor is further configured to acquire a data turn-on instruction used to instruct to turn on the mobile data service; and turn on the mobile data service according to the data turn-on instruction, and adjust the signal measurement cycle of the current serving cell to the signal measurement cycle before adjustment.

In an implementation manner of this embodiment of the present invention, the terminal is a dual card dual standby terminal, the dual card dual standby terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement cycle of a current serving cell corresponding to the second smart card.

In the foregoing implementation manners of this embodiment of the present invention, the signal measurement cycle of the current serving cell may be a discontinuous reception DRX cycle.

In an embodiment of the present invention, an embodiment of a terminal is further provided. The terminal supports at least a 4G network. The terminal may be used to perform steps of the method shown in FIG. 2, and for details of the steps of the method, reference may be made to the method embodiment. As shown in FIG. 8, the terminal includes a processor 801, where the processor 801 is configured to acquire a data turn-off instruction used to instruct to turn off a mobile data service; and turn off a mobile data service according to the data turn-off instruction, and adjust a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment.

In an implementation manner of this embodiment of the present invention, the terminal is a dual card dual standby terminal, the dual card dual standby terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement threshold value of a current serving cell corresponding to the second smart card.

In the foregoing implementation manner of this embodiment of the present invention, the processor adjusts a signal measurement threshold value of the neighboring cell of the current serving cell after adjustment to be less than the signal measurement value of the neighboring cell of the current serving cell before adjustment by 2 dB or 3 dB.

In the foregoing implementation manner of this embodiment of the present invention, the processor is further configured to acquire a data turn-on instruction used to instruct to turn on the mobile data service; and turn on the mobile data service according to the data turn-on instruction, and adjust the signal measurement threshold value of the neighboring cell of the current serving cell to the signal measurement threshold value of the neighboring cell of the current serving cell before adjustment.

In an embodiment of the present invention, an embodiment of a terminal is further provided. The terminal supports at least a 4G network. The terminal may be used to perform steps of the method shown in FIG. 3, and for details of the steps of the method, reference may be made to the method embodiment. As shown in FIG. 8, the terminal includes a processor 801, where the processor 801 is configured to acquire a data turn-off instruction used to instruct to turn off a mobile data service; and turn off a mobile data service according to the data turn-off instruction, and adjust a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment.

In an implementation manner of this embodiment of the present invention, the terminal is a dual card dual standby terminal, the dual card dual standby terminal includes a first smart card and a second smart card, and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement parameter of a neighboring cell of a current serving cell corresponding to the second smart card.

In an implementation manner of this embodiment of the present invention, the signal measurement parameter includes a selection receive level Srxlev value, and that the processor adjusts the signal measurement parameter of the neighboring cell of the current serving cell includes: acquiring a power value of a reference signal of the current serving cell, a minimum signal power value required by the current serving cell, and a power offset value required by the current serving cell; acquiring a selection receive level Srxlev value of the current serving cell according to the power value of the reference signal of the current serving cell, the minimum signal power value required by the current serving cell, and the power offset value required by the current serving cell; and adjusting the Srxlev value, where an Srxlev value after adjustment is greater than the Srxlev value before adjustment; or acquiring a power value of a reference signal of the current serving cell, a minimum signal power value required by the current serving cell, and a power offset value required by the current serving cell; and adjusting at least one of the power value of the reference signal of the current serving cell, the minimum signal power value required by the current serving cell, and the power offset value required by the current serving cell, so that an Srxlev value acquired according to the power value of the reference signal of the current serving cell, the minimum signal power value required by the current serving cell, and the power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

In an implementation manner of this embodiment of the present invention, the signal measurement parameter includes a selection receive level Srxlev value and a selection quality Squal value, and that the processor adjusts the signal measurement parameter of the neighboring cell of the current serving cell includes: acquiring a power value of a reference signal of the current serving cell, a minimum signal power value required by the current serving cell, and a power offset value required by the current serving cell; acquiring an Srxlev value according to the power value of the reference signal of the current serving cell, the minimum signal power value required by the current serving cell, and the power offset value required by the current serving cell; acquiring a quality value of the reference signal of the current serving cell, a minimum signal quality value required by the current serving cell, and a quality offset value required by the current serving cell; acquiring a Squal value of the current serving cell according to the quality value of the reference signal of the current serving cell, the minimum signal quality value required by the current serving cell, and the quality offset value required by the current serving cell; and adjusting the Srxlev value and the Squal value, where an Srxlev value after adjustment is greater than the Srxlev value before adjustment, and a Squal value after adjustment is greater than the Squal value before adjustment; or acquiring a power value of a reference signal of the current serving cell, a minimum signal power value required by the current serving cell, and a power offset value required by the current serving cell; acquiring a quality value of the reference signal of the current serving cell, a minimum signal quality value required by the current serving cell, and a quality offset value required by the current serving cell; and adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

In an implementation manner of this embodiment of the present invention, the processor is further configured to acquire a data turn-on instruction used to instruct to turn on the mobile data service; and turn on the mobile data service according to the data turn-on instruction, and adjust the value of the signal measurement parameter of the neighboring cell of the current serving cell to the value of the signal measurement parameter of the neighboring cell of the current serving cell before adjustment.

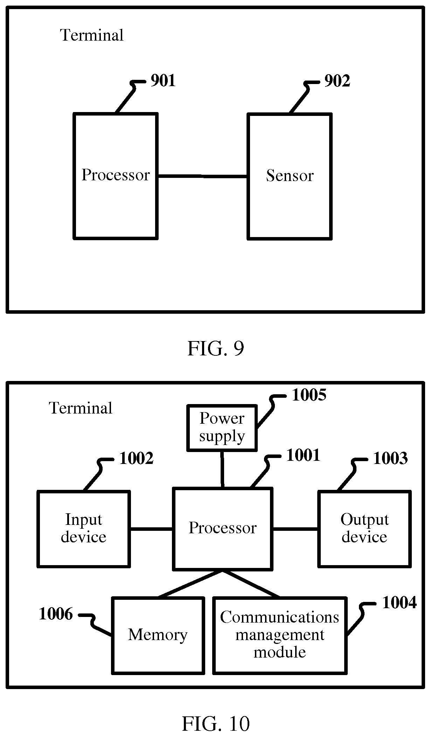

In an embodiment of the present invention, an embodiment of a terminal is further provided. The terminal supports at least a 4G network. The terminal may be used to perform steps of the method shown in FIG. 4, and for details of the steps of the method, reference may be made to the method embodiment. As shown in FIG. 9, the terminal includes a processor 901 and a sensor 902, where the processor 901 is connected to the sensor 902; the processor 901 is configured to acquire a data turn-off instruction used to instruct to turn off a mobile data service; and turn off a mobile data service according to the data turn-off instruction; the sensor 902 is configured to acquire location information of the terminal; the processor 901 is further configured to stop signal measurement when it is determined according to the location information acquired by the sensor 902 that a location of the terminal does not change.

In an implementation manner of this embodiment of the present invention, the sensor is further configured to: after the processor stops signal measurement, acquire location information of the terminal; the processor is further configured to: when it is determined according to the location information acquired by the sensor that a location of the terminal keeps changing within a preset time, start signal measurement.

In an embodiment of the present invention, an embodiment of a terminal is further provided. The terminal is a terminal that supports at least a 4G network, and may be specifically a circuit domain fallback CSFB terminal that supports at least 4G; or is a dual card dual standby terminal that supports at least 4G. The terminal may be used to perform steps of the method shown in FIG. 5, and for details of the steps of the method, reference may be made to the method embodiment. As shown in FIG. 8, the terminal includes a processor 801, and the processor 801 is configured to acquire a data turn-off instruction used to instruct to turn off a mobile data service; and turn off a mobile data service according to the data turn-off instruction, reselect a 3G or 2G network cell, and camp on the reselected network cell.

In an implementation manner of this embodiment of the present invention, the terminal includes a first smart card and a second smart card; and the processor is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and reselect the 3G or 2G network cell for the second smart card.

In an implementation manner of this embodiment of the present invention, the terminal further includes a transmitter, where the transmitter is configured to send a first attach request to a mobile network in which the first smart card is located; the transmitter is further configured to send a detach request to a 4G mobile network in which the second smart card is located; the transmitter is further configured to send a second attach request to the 3G or 2G network reselected for the second smart card.

In an implementation manner of this embodiment of the present invention, the terminal further includes an output device, where the output device is configured to present user prompt information, where the user prompt information is used to inform a user that the second smart card turns off a mobile data service and the first smart card turns on a mobile data service.

In an implementation manner of this embodiment of the present invention, the terminal further includes an output device, where the output device is configured to present user prompt information, where the user prompt information is used to inform a user whether it is necessary to reselect the 3G or 2G network cell, and camp on the reselected network cell; the processor is specifically configured to acquire a reselection and camping instruction that is input according to the user prompt information by the user, and reselect the 3G or 2G network cell and camp on the reselected cell according to the reselection and camping instruction.

In an implementation manner of this embodiment of the present invention, that the processor reselects the 3G or 2G network cell, and camps on the reselected network cell includes: the processor is configured to reselect the 3G network cell and camp on the 3G network cell; the processor is further configured to: when it is failed to reselect the 3G network cell, reselect the 2G network cell and camp on the 2G network cell.

In an implementation manner of this embodiment of the present invention, after turning off a data service, the processor is further configured to record frequency information of a connected Long Term Evolution LTE network, where the frequency information includes at least one of carrier frequency information and frequency band information; turn on a mobile data service; and acquire the frequency information, and access the LTE network corresponding to the frequency information.

In the foregoing terminal embodiments of the present invention, as shown in FIG. 10, the terminal may further include components such as an input device 1002, an output device 1003, a communications management module 1004, a power supply 1005, and a memory 1006. The components may be connected by using a communications bus.

The input device is configured to implement interaction between a user and the terminal and/or input of information to the terminal. For example, the input device may receive digital or character information input by the user, to generate signal input related to user settings or function control. In a specific implementation manner of the present invention, the input device may be a touch panel, or may be another human-computer interaction interface, for example, a substantive input key and a microphone, or may be another external information capturing apparatus, for example, a camera. The touch panel is also referred to as a touchscreen or a touch control screen, and may collect an operation of the user to touch or approach the touch panel, for example, an operation of the user at a position on the touch panel or near the touch panel by using any suitable object or accessory such as a finger and a stylus, and drive a corresponding connection apparatus according to a preset program. Optionally, the touch panel may include two parts: a touch detection apparatus and a touch controller. The touch detection apparatus detects a touch operation of the user, converts the detected touch operation into an electric signal, and transfers the electric signal to the touch controller. The touch controller receives the electric signal from the touch detection apparatus, converts the electric signal into contact coordinates, and then sends the contact coordinates to a processing unit in a storage and processing module. The touch controller may further receive a command sent from a processor and execute the command. In addition, the touch panel may be implemented by using various types, such as a resistive type, a capacitive type, an infrared type, and a surface acoustic wave type. In another implementation manner of the present invention, the substantive input key used by the input device may include, but is not limited to, one or more of a physical keyboard, a functional key (for example, a volume control key, and a switch key), a trackball, a mouse, and a joystick. An input module in a form of a microphone may collect voice input by the user or from an environment and convert the voice into a command that is in a form of an electric signal and can be executed by the processing unit. In some other implementation manners of the present invention, the input device may be various sensing devices, for example, a Hall device, and is configured to detect a physical quantity, for example, a force, a torque, pressure, a stress, a location, a displacement, a speed, an acceleration, an angle, an angular velocity, revolutions, a rotational speed, and a time when a working state changes, of a mobile terminal, and converts the physical quantity into an electric quantity to perform detection and control. Some other sensing devices such as a gravity sensor, a tri-axis accelerometer, and a gyroscope may be further included.

The processor is a control center of the terminal, connects to various parts of the entire terminal by using various interfaces and circuits, and performs various functions and/or processes data of the mobile terminal by running or executing a software program and/or module stored in the memory and invoking data stored in the memory. The processor includes an integrated circuit (Integrated Circuit, IC for short), for example, may include a single packaged IC, or may include multiple connected packaged ICs having a same function or different functions. For example, the processor may include only a central processing unit (Central Processing Unit, CPU for short), or may be a combination of a GPU, a digital signal processor (Digital Signal Processor, DSP for short), and a control chip (for example, a baseband chip) in the communications management module. In an implementation manner of the present invention, the CPU may be a single operation core, or may include multiple operation cores.

The memory may be configured to store a software program setting and a system setting. The processor executes various functional applications and implements data processing of the mobile terminal by reading a software program configuration and a system configuration that are stored in the memory. The memory includes a program setting storage area and a system setting storage area, where the program configuration storage area may store configuration information of at least one application program, for example, a sound playing program and an image display program; and the system storage area may store system configuration data and the like created according to use of the mobile terminal. In a specific implementation manner of the present invention, the memory may include a volatile memory, for example, a non-volatile dynamic random access memory (Non-volatile Random Access Memory, NVRAM for short), a phase change random access memory (Phase Change RAM, PRAM for short), and a magetoresistive random access memory (Magetoresistive RAM, MRAM for short), and may also include a non-volatile memory, for example, at least one a magnetic disk storage device, an electrically erasable programmable read-only memory (Electrically Erasable Programmable Read-Only Memory, EEPROM for short), and a flash memory device, for example, a NOR flash memory (NOR flash memory) or a NAND flash memory (NAND flash memory). The non-volatile memory stores an operating system and an application program that are executed by the processor. The processor loads a running program and data from the non-volatile memory to memory and stores digital content in massive storage apparatuses. The operating system includes various components and/or drives that are used to control and manage a conventional system task, for example, memory management, storage device control, and power management, and to help perform communication between various software and hardware. In an implementation manner of the present invention, the operating system may be an Android system from Google Company, an iOS system developed by Apple Company, a Windows operating system developed by Microsoft Company, or the like, or is an embedded operating system such as Vxworks, and the operating system is not limited in the embodiments of the present invention.

The communications management module provides hardware and drives, an application software environment, and an external interface that are required for communication and various communication-based functions, and performs sensing and interaction with a system by using a communications module. The communications management module may include a communications module such as a wireless local area network (Wireless Local Area Network, wireless LAN for short) module, a Bluetooth module, and a WiFi direct module, and a radio frequency (Radio Frequency, RF for short) circuit corresponding to the communications module, and is configured to perform wireless local area network communication, Bluetooth communication, and infrared communication. The communications module is configured to control communication of various components in the mobile terminal, and may support direct memory access (Direct Memory Access). In different implementation manners of the embodiments of the present invention, various communications modules in the communications management module generally appear in a form of an integrated circuit chip (Integrated Circuit Chip), and may be selectively combined, where all communications modules and a corresponding antenna group are not required to be included.

The output device includes, but is not limited to, a video output module and a sound output module. The video output module is configured to output a text, a picture and/or a video. The video output module may include a display panel, for example, a display panel configured in a form such as an LCD (Liquid Crystal Display, liquid crystal display), an OLED (Organic Light-Emitting Diode, organic light-emitting diode), and a field emission display (field emission display, FED for short). Alternatively, the video output module may include a reflective display, for example, an electrophoretic (electrophoretic) display, or a display using interferometric modulation of light (Interferometric Modulation of Light). The video output module may include a single display or multiple displays of different sizes. In a specific implementation manner of the present invention, the touch panel used in the foregoing input device may also be used as the display panel of the output device. For example, after detecting a gesture operation touching or approaching the touch panel, the touch panel transfers the gesture operation to the processing unit to determine a type of a touch event, and subsequently the processing unit provides corresponding visual output on the display panel according to the type of the touch event. Although in FIG. 1, the input module and the output module are used as two independent parts to implement input and output functions of the mobile terminal, in some embodiments, the touch panel and the display panel may be integrated to implement the input and output functions of the mobile terminal. For example, the video output module may display various graphical user interfaces (Graphical User Interface, GUI for short) as virtual control components, which include, but are not limited to, a window, a scroll bar, an icon, and a scrapbook, so that the user performs an operation in a touch control manner.

In a specific implementation manner of the present invention, the video output module includes a filter and an amplifier, which are configured to filter and amplify a video output by the processing unit. The sound output module includes: a digital-to-analog converter, configured to convert a sound signal output by the processing unit from a digital format into an analog format; and a loudspeaker, configured to output sound and the like. A sound signal created and propagated by the sound output module includes sound, ultrasound, or any sound signal that can be modulated. During creation of a sound signal, a sound signal may be generated in real time according to a specific algorithm, or an existing audio file may be directly used. The sound output module sends the sound signal by using an audio card apparatus.

The power supply is configured to supply power to different parts of the terminal to keep the terminal running. As a general understanding, the power supply may be an internal battery, for example, a common lithium ion battery and a common nickel-hydrogen battery, or includes an external power supply, for example, an AC adapter, that directly supplies power to the mobile terminal. In some implementation manners of the present invention, the power supply may have wider definitions, for example, may further include a power management system, a charging system, a power supply fault detection circuit, a power converter or inverter, a power status indicator (for example, a light-emitting diode), and any other component related to generation, management, and distribution of electric power of the mobile terminal.

It should be noted that in the foregoing embodiments of the present invention, the same or corresponding technical features above may be used as reference for each other. The embodiments of the present invention may include various combinations of the foregoing technical features.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A method for adjusting a signal measurement cycle, applied to a terminal that supports at least a 4G network, wherein the method comprises:

    acquiring a data turn-off instruction used to instruct to turn off a mobile data service; and
    turning off a mobile data service according to the data turn-off instruction, and adjusting a signal measurement cycle of a current serving cell, wherein a signal measurement cycle after adjustment is N times as long as the signal measurement cycle before adjustment, N is an integer, and $N \geq 2$.

2. The method according to claim 1, wherein after the turning off a mobile data service, the method further comprises:

    acquiring a data turn-on instruction used to instruct to turn on the mobile data service; and
    turning on the mobile data service according to the data turn-on instruction, and adjusting the signal measurement cycle of the current serving cell to the signal measurement cycle before adjustment.

3. The method according to claim 1 or 2, wherein the terminal is a dual card dual standby terminal, the dual card dual standby terminal comprises a first smart card and a second smart card, and the acquiring a data turn-off instruction used to instruct to turn off a mobile data service comprises:

    acquiring a data turn-off instruction used to instruct to turn on a mobile data service of the first smart card and to turn off a mobile data service of the second smart card; and
    the turning off a mobile data service according to the data turn-off instruction, and adjusting a signal measurement cycle of a current serving cell comprises:

        turning on a mobile data service of the first smart card and turning off a mobile data service of the second smart card according to the data turn-off instruction, and adjusting a signal measurement cycle of a current serving cell corresponding to the second smart card.

4. The method according to any one of claims 1 to 3, wherein the signal measurement cycle of the current serving cell is a discontinuous reception DRX cycle.

5. A method for adjusting a signal measurement threshold, applied to a terminal that supports at least a 4G network, wherein the method comprises:

    acquiring a data turn-off instruction used to instruct to turn off a mobile data service; and
    turning off a mobile data service according to the data turn-off instruction, and adjusting a signal measurement threshold value of a neighboring cell of a current serving cell, wherein a signal measurement threshold value of the neighboring cell of the current serving cell after adjustment is less than the signal measurement threshold value of the neighboring cell of the current serving cell before adjustment.

6. The method according to claim 5, wherein the terminal is a dual card dual standby terminal, a first smart card and a second smart card are connected to the dual card dual standby terminal, and the acquiring a data turn-off instruction used to instruct to turn off a mobile data service comprises:

acquiring a data turn-off instruction used to instruct to turn on a mobile data service of the first smart card and to turn off a mobile data service of the second smart card; and
the turning off a mobile data service according to the data turn-off instruction, and adjusting a signal measurement threshold value of a current serving cell comprises:

turning on a mobile data service of the first smart card and turning off a mobile data service of the second smart card according to the data turn-off instruction, and adjusting a signal measurement threshold value of a current serving cell corresponding to the second smart card.

7. The method according to claim 5 or 6, wherein the signal measurement threshold value of the neighboring cell of the current serving cell after adjustment is less than the signal measurement threshold value of the neighboring cell of the current serving cell before adjustment by 2 decibels dB or 3 dB.

8. The method according to any one of claims 5 to 7, wherein after the turning off a mobile data service, the method further comprises:

acquiring a data turn-on instruction used to instruct to turn on the mobile data service; and
turning on the mobile data service according to the data turn-on instruction, and adjusting the signal measurement threshold value of the neighboring cell of the current serving cell to the signal measurement threshold value of the neighboring cell of the current serving cell before adjustment.

9. A method for adjusting a signal measurement threshold, applied to a terminal that supports at least a 4G network, wherein the method comprises:

acquiring a data turn-off instruction used to instruct to turn off a mobile data service; and
turning off a mobile data service according to the data turn-off instruction, and adjusting a signal measurement parameter of a neighboring cell of a current serving cell, wherein a value of a signal measurement parameter of the neighboring cell of the current serving cell after adjustment is greater than a value of the signal measurement parameter of the neighboring cell of the current serving cell before adjustment.

10. The method according to claim 9, wherein the terminal is a dual card dual standby terminal, a first smart card and a second smart card are connected to the dual card dual standby terminal, and the acquiring a data turn-off instruction used to instruct to turn off a mobile data service comprises:

acquiring a data turn-off instruction used to instruct to turn on a mobile data service of the first smart card and to turn off a mobile data service of the second smart card; and
the turning off a mobile data service according to the data turn-off instruction, and adjusting a signal measurement parameter of a neighboring cell of a current serving cell comprises:

turning on a mobile data service of the first smart card and turning off a mobile data service of the second smart card according to the data turn-off instruction, and adjusting a signal measurement parameter of a neighboring cell of a current serving cell corresponding to the second smart card.

11. The method according to claim 9 or 10, wherein the signal measurement parameter comprises a selection receive level Srxlev value, and the adjusting a signal measurement parameter of a neighboring cell of a current serving cell comprises:

acquiring a power value of a reference signal of the current serving cell, a minimum signal power value required by the current serving cell, and a power offset value required by the current serving cell;
acquiring an Srxlev value of the current serving cell according to the power value of the reference signal of the current serving cell, the minimum signal power value required by the current serving cell, and the power offset value required by the current serving cell; and

adjusting the Srxlev value, wherein an Srxlev value after adjustment is greater than the Srxlev value before adjustment;

or

acquiring a power value of a reference signal of the current serving cell, a minimum signal power value required by the current serving cell, and a power offset value required by the current serving cell; and

adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

12. The method according to claim 9 or 10, wherein the signal measurement parameter comprises a selection receive level Srxlev value and a selection quality Squal value, and the adjusting a signal measurement parameter of a neighboring cell of a current serving cell comprises:

acquiring a power value of a reference signal of the current serving cell, a minimum signal power value required by the current serving cell, and a power offset value required by the current serving cell;

acquiring an Srxlev value according to the power value of the reference signal of the current serving cell, the minimum signal power value required by the current serving cell, and the power offset value required by the current serving cell;

acquiring a quality value of the reference signal of the current serving cell, a minimum signal quality value required by the current serving cell, and a quality offset value required by the current serving cell;

acquiring a Squal value of the current serving cell according to the quality value of the reference signal of the current serving cell, the minimum signal quality value required by the current serving cell, and the quality offset value required by the current serving cell; and

adjusting the Srxlev value and the Squal value, wherein an Srxlev value after adjustment is greater than the Srxlev value before adjustment, and a Squal value after adjustment is greater than the Squal value before adjustment;

or

acquiring a power value of a reference signal of the current serving cell, a minimum signal power value required by the current serving cell, and a power offset value required by the current serving cell;

acquiring a quality value of the reference signal of the current serving cell, a minimum signal quality value required by the current serving cell, and a quality offset value required by the current serving cell;

adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and

adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

13. The method according to any one of claims 9 to 12, wherein after the turning off a mobile data service, the method further comprises:

acquiring a data turn-on instruction used to instruct to turn on the mobile data service; and

turning on the mobile data service according to the data turn-on instruction, and adjusting the value of the signal measurement parameter of the neighboring cell of the current serving cell to the value of the signal measurement parameter of the neighboring cell of the current serving cell before adjustment.

14. A signal measurement method, applied to a terminal that supports at least a 4G network, wherein the method comprises:

acquiring a data turn-off instruction used to instruct to turn off a mobile data service;
turning off a mobile data service according to the data turn-off instruction;
acquiring location information of the terminal by using a sensor; and
stopping signal measurement when it is determined according to the location information that a location of the terminal does not change.

15. The method according to claim 14, wherein after the stopping signal measurement when it is determined according to the location information that a location of the terminal does not change, the method further comprises:

acquiring the location information of the terminal by using the sensor; and
when it is determined according to the location information that the location of the terminal keeps changing within a preset time, starting signal measurement.

16. A network handover method, applied to a terminal that supports at least 4G, wherein the method comprises:

acquiring a data turn-off instruction used to instruct to turn off a mobile data service; and
turning off a mobile data service according to the data turn-off instruction, reselecting a 3G or 2G network cell, and camping on the reselected network cell.

17. The method according to claim 16, wherein the network handover method is applied to a circuit domain fallback CSFB terminal that supports at least 4G; or the network handover method is applied to a dual card dual standby terminal that supports at least 4G.

18. The method according to claim 16 or 17, wherein the terminal comprises a first smart card and a second smart card, and the acquiring a data turn-off instruction used to instruct to turn off a mobile data service comprises:

acquiring a data turn-off instruction used to instruct to turn on a mobile data service of the first smart card and to turn off a mobile data service of the second smart card; and
the turning off a mobile data service according to the data turn-off instruction, and reselecting a 3G or 2G network cell comprises:

turning on a mobile data service of the first smart card and turning off a mobile data service of the second smart card according to the data turn-off instruction, and reselecting the 3G or 2G network cell for the second smart card.

19. The method according to claim 18, wherein
the turning on a mobile data service of the first smart card comprises:

sending a first attach request to a mobile network in which the first smart card is located;
the turning off a mobile data service of the second smart card comprises:

sending a detach request to a 4G mobile network in which the second smart card is located; and
the reselecting the 3G or 2G network cell for the second smart card comprises:

sending a second attach request to the 3G or 2G network reselected for the second smart card.

20. The method according to claim 18 or 29, wherein the method further comprises:

presenting, by the terminal, user prompt information, wherein the user prompt information is used to inform a user that the second smart card turns off a mobile data service and the first smart card turns on a mobile data service.

**21.** The method according to any one of claims 16 to 19, wherein after the turning off a data service, the turning off a mobile data service according to the data turn-off instruction, reselecting a 3G or 2G network cell, and camping on the reselected network cell comprises:

turning off a mobile data service according to the data turn-off instruction, and presenting user prompt information, wherein the user prompt information is used to inform a user whether it is necessary to reselect the 3G or 2G network cell; and

acquiring a reselection and camping instruction that is input according to the user prompt information by the user, and reselecting the 3G or 2G network cell and camping on the reselected cell according to the reselection and camping instruction.

**22.** The method according to any one of claims 16 to 21, wherein the reselecting a 3G or 2G network cell and camping on the reselected network cell comprises:

reselecting the 3G network cell and camping on the 3G network cell; and

when it is failed to reselect the 3G network cell, reselecting the 2G network cell and camping on the 2G network cell.

**23.** The method according to any one of claims 16 to 22, wherein the method further comprises:

recording frequency information of a connected 4G network, wherein the frequency information comprises at least one of carrier frequency information and frequency band information;

turning on a mobile data service again; and

acquiring the recorded frequency information, and accessing the 4G network corresponding to the frequency information.

**24.** A wireless communications device, comprising a modem Modem module, wherein the Modem module is configured to:

acquire a data turn-off instruction, wherein the data turn-off instruction is used to instruct to turn off a mobile data service; and

turn off a mobile data service according to the data turn-off instruction, and adjust a signal measurement cycle of a current serving cell, wherein a length of a signal measurement cycle after adjustment is greater than a length of the signal measurement cycle before adjustment.

**25.** The wireless communications device according to claim 24, wherein the Modem module is further configured to:

acquire a data turn-on instruction used to instruct to turn on the mobile data service; and

turn on the mobile data service according to the data turn-on instruction, and adjust the signal measurement cycle of the current serving cell to the signal measurement cycle before adjustment.

**26.** The wireless communications device according to claim 24 or 25, wherein the wireless communications device is applied to a dual card dual standby terminal, the dual card dual standby terminal comprises a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement cycle of a current serving cell corresponding to the second smart card.

**27.** The wireless communications device according to any one of claims 24 to 26, wherein the signal measurement cycle of the current serving cell is a discontinuous reception DRX cycle.

**28.** A wireless communications device, comprising a modem Modem module, wherein the Modem module is configured to:

acquire a data turn-off instruction used to instruct to turn off a mobile data service; and

turn off a mobile data service according to the data turn-off instruction, and adjust a signal measurement threshold value of a neighboring cell of a current serving cell, wherein a signal measurement threshold value of the neighboring cell of the current serving cell after adjustment is less than the signal measurement threshold value of the neighboring cell of the current serving cell before adjustment.

29. The wireless communications device according to claim 28, wherein the wireless communications device is applied to a dual card dual standby terminal, the dual card dual standby terminal comprises a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement threshold value of a current serving cell corresponding to the second smart card.

30. The wireless communications device according to claim 28 or 29, wherein the Modem module adjusts the signal measurement threshold value of the neighboring cell of the current serving cell after adjustment to be less than the signal measurement value of the neighboring cell of the current serving cell before adjustment by 2 decibels dB or 3 dB.

31. The wireless communications device according to any one of claims 28 to 30, wherein the Modem module is further configured to:

acquire a data turn-on instruction used to instruct to turn on the mobile data service; and
turn on the mobile data service according to the data turn-on instruction, and adjust the signal measurement threshold value of the neighboring cell of the current serving cell to the signal measurement threshold value of the neighboring cell of the current serving cell before adjustment.

32. A wireless communications device, comprising a modem Modem module, wherein the Modem module is configured to:

acquire a data turn-off instruction used to instruct to turn off a mobile data service; and
turn off a mobile data service according to the data turn-off instruction, and adjust a signal measurement parameter of a neighboring cell of a current serving cell, wherein a value of a signal measurement parameter of the neighboring cell of the current serving cell after adjustment is greater than a value of the signal measurement parameter of the neighboring cell of the current serving cell before adjustment.

33. The wireless communications device according to claim 32, wherein the wireless communications device is applied to a dual card dual standby terminal, the dual card dual standby terminal comprises a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and adjust a signal measurement parameter of a neighboring cell of a current serving cell corresponding to the second smart card.

34. The wireless communications device according to claim 32 or 33, wherein the signal measurement parameter comprises a selection receive level Srxlev value, and that the Modem module adjusts the signal measurement parameter of the neighboring cell of the current serving cell comprises:

acquiring a power value of a reference signal of the current serving cell, a minimum signal power value required by the current serving cell, and a power offset value required by the current serving cell;
acquiring a selection receive level Srxlev value of the current serving cell according to the power value of the reference signal of the current serving cell, the minimum signal power value required by the current serving cell, and the power offset value required by the current serving cell; and
adjusting the Srxlev value, wherein an Srxlev value after adjustment is greater than the Srxlev value before adjustment;
or
acquiring a power value of a reference signal of the current serving cell, a minimum signal power value required by the current serving cell, and a power offset value required by the current serving cell; and
adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment.

35. The wireless communications device according to claim 32 or 33, wherein the signal measurement parameter comprises a selection receive level Srxlev value and a selection quality Squal value, and that the Modem module adjusts the signal measurement parameter of the neighboring cell of the current serving cell comprises:

acquiring a power value of a reference signal of the current serving cell, a minimum signal power value required by the current serving cell, and a power offset value required by the current serving cell;
acquiring an Srxlev value according to the power value of the reference signal of the current serving cell, the minimum signal power value required by the current serving cell, and the power offset value required by the current serving cell;
acquiring a quality value of the reference signal of the current serving cell, a minimum signal quality value required by the current serving cell, and a quality offset value required by the current serving cell;
acquiring a Squal value of the current serving cell according to the quality value of the reference signal of the current serving cell, the minimum signal quality value required by the current serving cell, and the quality offset value required by the current serving cell; and
adjusting the Srxlev value and the Squal value, wherein an Srxlev value after adjustment is greater than the Srxlev value before adjustment, and a Squal value after adjustment is greater than the Squal value before adjustment;
or
acquiring a power value of a reference signal of the current serving cell, a minimum signal power value required by the current serving cell, and a power offset value required by the current serving cell;
acquiring a quality value of the reference signal of the current serving cell, a minimum signal quality value required by the current serving cell, and a quality offset value required by the current serving cell;
adjusting at least one of the power value of the reference signal of the current serving cell, the minimum signal power value required by the current serving cell, and the power offset value required by the current serving cell, so that an Srxlev value acquired according to a power value of the reference signal of the current serving cell, a minimum signal power value required by the current serving cell, and a power offset value required by the current serving cell that are obtained after adjustment is greater than an Srxlev value acquired according to the power value of the reference signal of the current serving cell, the minimum signal power value required by the current serving cell, and the power offset value required by the current serving cell that are obtained before adjustment; and
adjusting at least one of the quality value of the reference signal of the current serving cell, the minimum signal quality value required by the current serving cell, and the quality offset value required by the current serving cell, so that a Squal value acquired according to a quality value of the reference signal of the current serving cell, a minimum signal quality value required by the current serving cell, and a quality offset value required by the current serving cell that are obtained after adjustment is greater than a Squal value acquired according to the quality value of the reference signal of the current serving cell, the minimum signal quality value required by the current serving cell, and the quality offset value required by the current serving cell that are obtained before adjustment.

36. The wireless communications device according to any one of claims 32 to 35, wherein the Modem module is further configured to:

acquire a data turn-on instruction used to instruct to turn on the mobile data service; and
turn on the mobile data service according to the data turn-on instruction, and adjust the value of the signal measurement parameter of the neighboring cell of the current serving cell to the value of the signal measurement parameter of the neighboring cell of the current serving cell before adjustment.

37. A wireless communications device, comprising a modem Modem module and an application processor AP, wherein the Modem module is connected to the AP,
the Modem module is configured to acquire a data turn-off instruction used to instruct to turn off a mobile data service; and turn off a mobile data service according to the data turn-off instruction;
the AP is configured to acquire, by using a sensor, location information of a terminal comprising the wireless communications device; and when it is determined according to the location information that a location of the terminal does not change, send a signal measurement stop indication to the Modem module; and
the Modem module is further configured to stop signal measurement according to the signal measurement stop indication sent by the AP.

**38.** The wireless communications device according to claim 37, wherein
the AP is further configured to: after the Modem module stops signal measurement, acquire the location information of the terminal by using the sensor; and when it is determined according to the location information that the location of the terminal keeps changing within a preset time, send a signal measurement start indication to the Modem module; and
the Modem module is further configured to start signal measurement according to the signal measurement start indication sent by the AP.

**39.** A wireless communications device, comprising a modem Modem module, wherein the Modem module is configured to:

acquire a data turn-off instruction used to instruct to turn off a mobile data service; and
turn off a mobile data service according to the data turn-off instruction, reselect a 3G or 2G network cell, and camp on the reselected network cell.

**40.** The wireless communications device according to claim 39, wherein the wireless communications device is applied to a circuit domain fallback CSFB terminal that supports at least 4G; or the wireless communications device is applied to a dual card dual standby terminal that supports at least 4G.

**41.** The wireless communications device according to claim 39 or 40, wherein the wireless communications device is applied to a terminal that supports at least 4G, the terminal comprises a first smart card and a second smart card, and the Modem module is specifically configured to acquire a data turn-off instruction used to instruct to turn on a mobile data service of the first smart card and to turn off a mobile data service of the second smart card; and turn on a mobile data service of the first smart card and turn off a mobile data service of the second smart card according to the data turn-off instruction, and reselect the 3G or 2G network cell for the second smart card.

**42.** The wireless communications device according to claim 41, wherein the wireless communications device further comprises an application processor AP, wherein the AP is connected to the Modem module,
the AP is configured to generate a first attach request; the AP is further configured to generate a detach request; the AP is further configured to generate a second attach request; and
the terminal further comprises a transmitter, wherein the transmitter is configured to send the first attach request to a mobile network in which the first smart card is located; the transmitter is further configured to send the detach request to a 4G mobile network in which the second smart card is located; and the transmitter is further configured to send the second attach request to the 3G or 2G network reselected for the second smart card.

**43.** The wireless communications device according to claim 41, wherein the wireless communications device further comprises an application processor AP, wherein the AP is connected to the Modem module,
the AP is configured to generate user prompt information, wherein the user prompt information is used to inform a user that the second smart card turns off a mobile data service and the first smart card turns on a mobile data service.

**44.** The wireless communications device according to any one of claims 39 to 42, wherein the wireless communications device further comprises an application processor AP, wherein the AP is connected to the Modem module,
the AP is configured to generate user prompt information, wherein the user prompt information is used to inform a user whether it is necessary to reselect the 3G or 2G network cell, and camp on the reselected network cell;
the AP is further configured to acquire a reselection and camping instruction that is input according to the user prompt information by the user, wherein the reselection and camping instruction is used to instruct the wireless communications device to reselect the 3G or 2G network cell, and camp on the reselected network cell; and
the Modem module is configured to: after the AP acquires the reselection and camping instruction, reselect the 3G or 2G network cell and camp on the reselected cell according to the reselection and camping instruction.

**45.** The wireless communications device according to any one of claims 39 to 44, wherein that the Modem module reselects the 3G or 2G network cell, and camps on the reselected network cell comprises:

the Modem module is configured to reselect the 3G network cell and camp on the 3G network cell; and

the Modem module is further configured to: when it is failed to reselect the 3G network cell, reselect the 2G network cell and camp on the 2G network cell.

46. The wireless communications device according to claim 39, wherein the wireless communications device further comprises an application processor AP, wherein the AP is connected to the Modem module,
the AP is configured to: after the Modem module turns off a data service, record frequency information of a connected Long Term Evolution LTE network, wherein the frequency information comprises at least one of carrier frequency information and frequency band information; and
the Modem module is further configured to turn on a mobile data service; and acquire the frequency information, and access the LTE network corresponding to the frequency information.

47. A terminal that supports at least a 4G network, wherein the terminal comprises the wireless communications device according to any one of claims 24 to 27.

48. A terminal that supports at least a 4G network, wherein the terminal comprises the wireless communications device according to any one of claims 28 to 31.

49. A terminal that supports at least a 4G network, wherein the terminal comprises the wireless communications device according to any one of claims 32 to 36.

50. A terminal that supports at least a 4G network, wherein the terminal comprises the wireless communications device according to claim 37 or 38.

51. A terminal that supports at least a 4G network, wherein the terminal comprises the wireless communications device according to any one of claims 39 to 46.

Acquire a data turn-off instruction used to instruct to turn off a mobile data service — S101

Turn off a mobile data service according to the data turn-off instruction, and adjust a signal measurement cycle of a current serving cell, where a signal measurement cycle after adjustment is N times as long as the signal measurement cycle before adjustment, N is an integer, and N ≥ 2 — S102

FIG. 1

Acquire a data turn-off instruction used to instruct to turn off a mobile data service — S201

Turn off a mobile data service according to the data turn-off instruction, and adjust a signal measurement threshold value of a neighboring cell of a current serving cell, where a signal measurement threshold value of the neighboring cell of the current serving cell after adjustment is less than the signal measurement threshold value of the neighboring cell of the current serving cell before adjustment — S202

FIG. 2

Acquire a data turn-off instruction used to instruct to turn off a mobile data service ⟋S301

Turn off a data service according to the data turn-off instruction, and adjust a signal measurement parameter of a neighboring cell of a current serving cell, where a value of a signal measurement parameter of the neighboring cell of the current serving cell after adjustment is greater than a value of the signal measurement parameter of the neighboring cell of the current serving cell before adjustment ⟋S302

FIG. 3

Acquire a data turn-off instruction used to instruct to turn off a mobile data service ⟋ S401

Turn off a data service according to the data turn-off instruction ⟋ S402

Acquire location information of the terminal by using a sensor ⟋ S403

Stop signal measurement when it is determined according to the location information that a location of the terminal does not change ⟋ S404

FIG. 4

Acquire a data turn-off instruction used to instruct to turn off a mobile data service ⟋S501

Turn off a mobile data service according to the data turn-off instruction, reselect a 3G or 2G network cell, and camp on the reselected network cell ⟋S502

FIG. 5

Wireless communications device

Modem Modem module ⟋ 601

FIG. 6

Wireless communications device

701

702

Modem
Modem
module

Application
processor AP

FIG. 7

Terminal

Processor

801

FIG. 8

Terminal

901

902

Processor

Sensor

FIG. 9

Terminal

1005

Power supply

1002

1001

1003

Input device

Processor

Output device

1006

Memory

Communications management module

1004

FIG. 10

# INTERNATIONAL SEARCH REPORT

| International application No. |
| --- |
| PCT/CN2014/085589 |

**A. CLASSIFICATION OF SUBJECT MATTER**

H04W 52/02 (2009.01) i; H04W 24/02 (2009.01) i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, WPI, EPODOC, CNKI: 4G, 3G, 2G, fourth, generation, circuit, switch+, packet, power, cost, model, fallback, csfb, signal, decrease, threshold, period, measure, idle, data, service, time, location, close, stop, pause, cut, dual, standby

**C. DOCUMENTS CONSIDERED TO BE RELEVANT**

| Category* | Citation of document, with indication, where appropriate, of the relevant passages | Relevant to claim No. |
| --- | --- | --- |
| X | CN 103906189 A (YULONG COMPUTER TELECOMMUNICATION SCIENTIFIC (SHENZHEN) CO., LTD.) 02 July 2014 (02.07.2014) the abstract, description, paragraphs [0004]-[0010], [0027]-[0031] | 1-51 |
| X | CN 103906195 A (YULONG COMPUTER TELECOMMUNICATION SCIENTIFIC (SHENZHEN) CO., LTD.) 02 July 2014 (02.07.2014) the abstract, description, paragraphs [0004]-[0010], [0024]-[0027] | 1-51 |
| X | CN 103281737 A (SHENZHEN ZTE MOBILE TECH CO., LTD.) 04 September 2013 (04.09.2013) the abstract, description, paragraphs [0002]-[0037] | 1-51 |
| X | CN 103906191 A (YULONG COMPUTER TELECOMMUNICATION SCIENTIFIC (SHENZHEN) CO., LTD.) 02 July 2014 (02.07.2014) the abstract, description, paragraphs [0004]-[0010], [0025]-[0027] | 1-51 |
| A | CN 102647767 A (HUAWEI DEVICE CO., LTD.) 22 August 2012 (22.08.2012) the whole document | 1-51 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 March 2015 | 20 April 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer FEI, Yuhui Telephone No. (86-10) 62413198 |
| --- | --- |

Form PCT/ISA/210 (second sheet) (July 2009)

<table>
<tr><td colspan="2"><strong>INTERNATIONAL SEARCH REPORT</strong><br>Information on patent family members</td><td>International application No.<br>PCT/CN2014/085589</td></tr>
</table>

| Patent Documents referred in the Report | Publication Date | Patent Family | Publication Date |
|---|---|---|---|
| CN 103906189 A | 02 July 2014 | None | |
| CN 103906195 A | 02 July 2014 | None | |
| CN 103281737 A | 04 September 2013 | None | |
| CN 103906191 A | 02 July 2014 | None | |
| CN 102647767 A | 22 August 2012 | None | |

Form PCT/ISA/210 (patent family annex) (July 2009)